# EUROPEAN PATENT APPLICATION

(11) **EP 4 654 629 A1**
(43) Date of publication of application: **26.11.2025**
(21) Application number: 25178280.1
(22) Date of filing: 22.05.2025
(51) Int. Cl.: H04W 4/40, H04W 4/44, H04W 4/46

(54) **METHOD, DEVICE, AND COMPUTER PROGRAM FOR IMPROVING COMMUNICATION IN AN INTELLIGENT TRANSPORT SYSTEM**

(30) Priority: 24.05.2024 GB 202407446
(71) Applicant: CANON KABUSHIKI KAISHA, Tokyo 146-8501 (JP)
(72) Inventor: MORVAN, Isabelle, 35517 CESSON-SÉVIGNÉ CEDEX (FR); BELLESSORT, Romain, 35517 CESSON-SÉVIGNÉ CEDEX (FR); NASSOR, Eric, 35517 CESSON-SÉVIGNÉ CEDEX (FR); RUELLAN, Hervé, 35517 CESSON-SÉVIGNÉ CEDEX (FR)
(74) Representative: Casalonga France

(57) **Abstract**

According to some embodiments of the disclosure, it is provided a method of communication, in an Intelligent Transport System, ITS, comprising an ITS station, ITS-S, the method comprising, at the ITS-S, updating a reporting policy of at least one perception region of a plurality of perception regions for reporting, in successive Collective Perception Messages, CPMs, characteristics of the at least one perception region, the updating being based on a situation change involving at least one perception region of the plurality of perception regions.

## Description

### FIELD OF THE DISCLOSURE

The present disclosure relates generally to Intelligent Transport Systems (ITSs) and more specifically to Cooperative Intelligent Transport Systems (C-ITSs).

### BACKGROUND OF THE DISCLOSURE

Cooperative Intelligent Transport Systems (C-ITSs) is an emerging technology for future transportation management that aims at improving road safety, traffic efficiency and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water, and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trademarks).

Exemplary ITS messages include Cooperative Awareness Messages (CAMs), Vulnerable Road Users Awareness Messages (VAMs), and Decentralized Environmental Notification Messages (DENMs). An ITS-S sending an ITS message is referred to as an "originating" ITS-S and an ITS-S receiving an ITS message is referred to as a "receiving" ITS-S. VAMs and CAMs are generally periodically sent with a period varying depending, for example, on the speed of the originating ITS-S.

It is noted that ETSI TS 103 324 (v2.1.1 of June 2023) defines the Collective Perception Service through which an ITS-S having on-board sensor systems detects objects in its vicinity and transmits, using broadcast Collective Perception Messages (CPMs), description information (e.g. dynamics such as position and/or kinematic information) thereof. The CPMs are sent periodically with a period from 100 ms to 1 s depending for example on the speed of the objects sensed by the originating ITS-S.

It is recalled here that ETSI TS 103 900 (V2.1.1, 2023) defines the Cooperative Awareness Basic Service, that may be used by an ITS-S to transmit, using broadcast CAMs, its ego-vehicle dynamics (e.g., its position and speed). The CAMs are generally periodically sent with a period varying from 100 milliseconds to one second depending, for example, on the speed of the originating ITS-S. Similarly, ETSI TS 103 300-3 (V2.2.1 of February 2023) defines the Vulnerable Road User (VRU) Awareness Basic Service, that may be used by an ITS-S to transmit, using broadcast VAMs, its ego-position and speed and the type of VRU (e.g., pedestrian).

It is also to be noted that ETSI TS 103 831 (V2.2.1, 2024) defines the Decentralized Environmental Notification Basic Service, that may be used by an originating ITS-S to send, using broadcast DENMs, notifications to other ITS-Ss, such as warnings or alerts. Such a message notifies an event (e.g., a road hazard, driving environment information, traffic condition information, etc.) detected by the originating ITS-S.

It is also to be noted that ETSI TS 103 301 (V2.1.1, 2021) defines message for the Infrastructure to Vehicles such as SPATEM (Signal Phase And Timing Extended Message) and/or MAPEM (MAP (topology) Extended Message) used to signal the traffic light phase and time and the road topology.

Each ITS station has an environment model called a Local Dynamic Map (LDM) that is regularly updated with highly dynamic data to locate vehicles, pedestrians, bicycles, etc., in the vicinity of the ITS station. The LDM is updated using information from on-board sensors and completed with information from received ITS messages such as awareness messages containing the ego-position and the speed of connected vehicles (CAMs) and/or of connected Vulnerable Road Users (VAMs) and such as Collective perception messages (CPMs) containing the perceived objects (e.g. vehicles, motorbikes, bicycles, or pedestrians) from sensor-equipped ITS stations. CPMs improve the local perception ability (larger field of view, non-connected objects etc.).

It is recalled that Collective Perception Messages (CPMs) make it possible to describe objects detected in a given region by using the definition of a perception region. This typically enables an ITS agent to split a monitored area in different regions and to describe them separately in different Perception Regions, either in a single CPM or in distinct CPMs.

While these mechanisms have proven to be efficient, there is a continuous need to improve them.

### SUMMARY OF THE DISCLOSURE

The present disclosure has been devised to address one or more of the foregoing concerns.

In this context, there is provided a solution to improve reporting of objects in perceived regions.

According to a first aspect of the disclosure, there is provided a method of communication, in an Intelligent Transport System, ITS, comprising an ITS station, ITS-S, the method comprising, at the ITS-S:
updating a reporting policy of at least one perception region of a plurality of perception regions for reporting, in successive Collective Perception Messages, CPMs, characteristics of the at least one perception region,
the updating being based on a situation change involving at least one perception region of the plurality of perception regions.

Accordingly, the method of the disclosure makes it possible to improve reporting of objects in CPMs and to improve bandwidth utilisation, by prioritising the data to be transmitted, for example based on the utility of the region as determined by a road application, the behaviour of the regions, the behaviour of the objects in relation to the regions, while keeping the transmittable message size compact.

According to some embodiments, the reporting policy comprises parameters, the parameters comprising at least one of an indication of when the at least one perception region associated with the reporting policy is to be reported, a frequency of reporting the at least one perception region associated with the reporting policy, a priority level of the at least one perception region associated with the reporting policy, a selection indication for selecting objects located within the at least one perception region associated with the reporting policy, that are to be reported, a mode of reporting objects located within the at least one perception region associated with the reporting policy, and a type of data associated with the at least one perception region associated with the reporting policy, that are to be reported.

Still according to some embodiments, updating the reporting policy comprises updating one or more of the parameters of the reporting policy.

Still according to some embodiments, modes of reporting objects located within the at least one perception region associated with the reporting policy comprise a mode of reporting a number of objects perceived in the at least one perception region associated with the reporting policy, a mode of reporting the number of objects and identifiers of all the objects perceived in the at least one perception region associated with the reporting policy, and/or a mode of reporting the number of objects and identifiers of some of the objects perceived in the at least one perception region associated with the reporting policy.

Still according to some embodiments, the method further comprises selecting a mode of reporting objects located within the at least one perception region associated with the reporting policy as a function of the number of objects and of a threshold.

Still according to some embodiments, an indication of when the at least one perception region associated with the reporting policy is to be reported is a next CPM to be generated, e.g., if the at least one perception region associated with the reporting policy is no longer empty.

Still according to some embodiments, a selection indication for selecting objects located within the at least one perception region associated with the reporting policy indicates selection of objects representative pf the at least one perception region associated with the reporting policy, e.g., objects located on a boundary of the at least one perception region associated with the reporting policy.

Still according to some embodiments, a frequency of reporting the at least one perception region associated with the reporting policy is determined as a function of the priority level of the at least one perception region associated with the reporting policy.

Still according to some embodiments, reporting the at least one perception region associated with the reporting policy comprises reporting, in relation to the at least one perception region associated with the reporting policy, at least one object perceived within the at least one perception region associated with the reporting policy.

Still according to some embodiments, at least two perception regions of the plurality are overlapping and wherein at least one object is perceived within all of the at least two perception regions, the at least one object perceived within all of the at least two perception regions being reported only in the one of at least two of the perception regions having the higher reporting priority among reporting priorities associated with the at least two perception regions. For the sake of illustration, the reporting priority may be based on a priority level.

Still according to some embodiments, the reporting policy is updated as a function of a behaviour of at least one object perceived in the at least one perception region associated with the reporting policy, with regard to the same and/or at least one different perception regions.

Still according to some embodiments, the reporting policy is updated as a function of a change of state of the at least one perception region associated with the reporting policy with regards to an occupancy of the at least one perception region associated with the reporting policy.

Still according to some embodiments, reporting objects perceived in the at least one perception region associated with the reporting policy, in a CPM, comprises signalling an object identifier of each of a part of the objects perceived in the at least one perception region associated with the reporting policy.

Still according to some embodiments, the reporting policy is updated as a function of a change of shape of at least one perception region of the plurality.

Still according to some embodiments, the method further comprises signalling, in the successive CPMs, a perception region identifier of the at least one perception region associated with the reporting policy.

Still according to some embodiments, the method further comprises splitting at least a portion of a perceived area into the plurality of perception regions as a function of perceived objects and/or as a function of a static description of the portion of the perceived area.

Still according to some embodiments, the method further comprises splitting the at least one perception region associated with the reporting policy as a function of a behaviour of at least one object perceived in the at least one perception region associated with the reporting policy.

Still according to some embodiments, the method further comprises selecting some objects perceived in the at least one perception region associated with the reporting policy, that are to be reported in CPMs.

Still according to some embodiments, the selection is carried out as a function of the reporting policy.

Still according to some embodiments, the selected objects are representative of characteristics of the at least one perception region.

Still according to some embodiments, the at least one perception region involved in the situation change is the at least one perception region associated with the reporting policy or at least one perception region different from the at least one perception region associated with the reporting policy.

According to a second aspect of the disclosure, there is provided a method of communication, in an Intelligent Transport System, ITS, comprising an ITS station, ITS-S, the method comprising, at the ITS-S:
splitting at least a portion of a perceived area comprising perceived objects, into a plurality of perception regions as a function of the perceived objects; and
reporting at least one of the perception regions in a Collective Perception Message, CPM, reporting a perception region in a CPM comprising reporting objects perceived in the reported perception region in the same CPM.

Accordingly, the method of the disclosure makes it possible to improve reporting of objects in CPMs and to improve bandwidth utilisation, by prioritising the data to be transmitted, for example based on the utility of the region as determined by a road application, the behaviour of the regions, the behaviour of the objects in relation to the regions, while keeping the transmittable message size compact.

According to some embodiments, the method further comprises repeating the splitting and the reporting as a function of a behaviour of at least one perceived object.

Still according to some embodiments, the method further comprises creating a perception region as a function of a behaviour of at least one perceived object.

Still according to some embodiments, the method further comprises splitting the perceived area into a plurality of perception regions as a function of a static description of at least a portion of the perceived area.

According to another aspect of the disclosure there is provided a device comprising a processing unit configured for carrying out each of the steps of the method described above.

This aspect of the disclosure has advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an Intelligent Transport System used to monitor a road intersection and capable of generating and receiving ITS messages such as Collective Perception Messages, CPMs, according to embodiments of the disclosure;
**Figure 2** illustrates a schematic representation of the architecture (or of a portion of the architecture) of a device generating CPMs, for example RSU 110 comprising analytic module 111 and ITS-S 112 as illustrated in Figure 1;
**Figure 3** illustrates an example of a structure of a Collective Perception Message;
**Figure 4****,** comprising Figures 4a and 4b, illustrates an example of steps of methods for generating CPMs and for processing received CPMs;
**Figure 5** illustrates an example of steps of a method for determining reporting policy of regions;
**Figure 6****,** comprising Figures 6a and figure 6b, illustrates scheduling of reporting regions over multiple CPM events;
**Figure 7** illustrates an example of steps of a method for determining reporting policy of objects contained in regions;
**Figure 8****,** comprising Figures 8a and figure 8b, illustrates scheduling of reporting overlapping regions over multiple CPM events;
**Figures 9 to 13** illustrate examples of use cases of splitting a perception area into regions and of determining dynamically the regions and the objects to report;
**Figure 14****,** comprising Figures 14a and 14b, illustrates an example of steps for splitting a perceived area into regions and for updating a region reporting policy; and
**Figure 15** is a schematic representation of an example of a communication ITS-S device configured to implement some embodiments of the present disclosure.

### DETAILED DESCRIPTION OF THE DISCLOSURE

The names of the lists and elements (such as data elements) provided in the following description are only illustrative. Embodiments are not limited thereto and other names could be used.

According to some embodiments of the disclosure, reporting objects in CPMs comprises splitting a perceived area into a plurality of regions based on an analysis of the traffic situation. Splitting a perceived area into a plurality of regions may be based on the topology of the perceived area (e.g., sidewalk, drivable lane splitting, etc.) and/or on its occupancy (e.g., traffic jam, empty areas, presence of an emergency vehicle or of dangerous road users, etc.).

Still according to some embodiments of the disclosure, priorities may be assigned to regions to improve reporting of these regions and the objects they contain, to receiving ITS-Ss. Selection of the priority of regions to report may be based on a situation analysis and/or based on the dynamic of the activity inside or near the region. For example, a higher priority may be given to a region that is susceptible to have dynamic objects (e.g., based on green traffic light, when the objects are vehicles), to a region having slow objects (e.g., traffic jam, when the objects are vehicles) or pedestrians when the receiving ITS-Ss are embedded in fast-approaching (e.g., on a highway), to a region that changes of state (e.g., an empty region that becomes non-empty), or to a region that changes of geometry.

The regions, their characteristics, and their priority may be used to determine a reporting policy of the regions and the associated objects in CPMs, for example to set the first-time inclusion and the frequency of the inclusion, to set which data type to report to characterize the region. In addition, the reporting policy of objects belonging to regions may be updated as a function of the role of the objects in the region and/or as function of a change of state of some regions.

Therefore, according to a particular aspect of the disclosure, the region and object inclusion in a CPM are prioritized based on the traffic situation and the quantity of data to transmit and according to another aspect of the disclosure, the split of the region is optimized based on the traffic situation.

Therefore, according to some embodiments, this disclosure makes it possible to use the Perception Region for:
- indicating free space and shadow area,
- organising the object information into smaller regions than a sensor region (functional safety use case), and
- indicating region occupancy (number of objects, list of objects) when monitoring complex situations (many objects).

### Intelligent Transport System

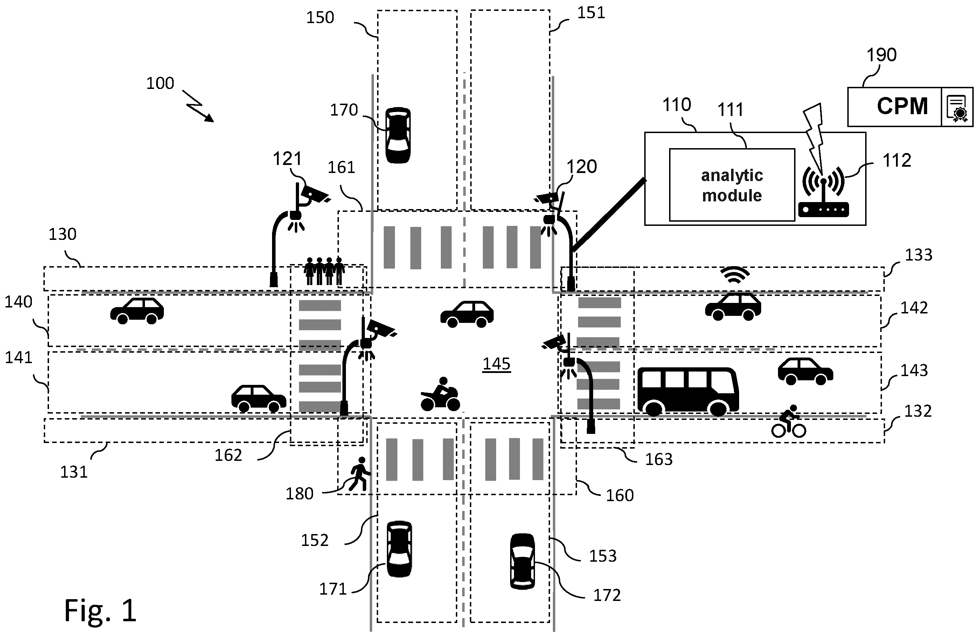

**Figure 1** illustrates an example of an Intelligent Transport System (ITS) 100 used to monitor a road intersection and capable of generating and receiving ITS messages such as Collective Perception Messages, CPMs, according to embodiments of the disclosure.

The area represented in Figure 1 is monitored by a roadside unit (RSU) 110 that comprises an ITS station (ITS-S) 112 and which is associated with a set of sensors, for instance one or more cameras such as cameras 120 and 121, lidars and/or radars. These sensors are used to monitor the traffic, in particular to identify vehicles, pedestrians, and possibly other kinds of objects, thanks to an analytic module 111. This analytic module is used to determine a list of objects that may be described in CPMs, for example in CPM 190 emitted by ITS station 112.

Other ITS-Ss of the ITS 100, for example an ITS-S associated with a vehicle, may also generate and transmit CPMs.

In the case of an urban area, many objects (e.g., pedestrians, vehicles, and bicycles) may be detected by the analytic module. Such a number of objects results in increasing the data size of the ITS messages transmitted over the wireless network. However, since the radio bandwidth for road ITS applications is limited, there is a need for the ITS-S transmitting ITS messages to prioritize the data to avoid overloading the radio channel.

An ITS-S receiving ITS messages reporting many objects, for example an ITS-S of a vehicle or roadside unit, should analyse them and determine how these objects influence driving decisions or decisions on the traffic management system.

As described above, the structure of the Collective Perception Messages (CPMs) makes it possible to organise items of information per regions of a perceived area.

For the sake of illustration and regarding the example illustrated in Figure 1, regions could be determined based on the road lane topology, enabling organizing the items of information so as to help a receiving ITS-S to analyse the scene. According to the illustrated example, regions are defined as follows:
- regions 130, 131, 132, and 133 are zones reserved for bicyclists,
- regions 140, 141, 142, 143, 145, 150, 151, 152, and 153 are regions where vehicles may circulate, and
- regions 160, 161, 162, and 163 are crosswalk zones used by pedestrians.

When a CPM is generated, each region is described in a Perception Region Container (PRC) part of the message, and perceived objects are described in a Perceived Object Container (POC) part. Objects located in a region described in the Perception Region Container may be reported, in the Perception Region Container, by their object identifier (Object ID or Object Id) as defined in the Perceived Object Container and/or the number of objects contained in the region may be indicated in the Perception Region Container. Table 1 in the Appendix provides an example of objects reported in the Perception Region Container of a CPM. As stated in this table, the description of region 150 in the Perception Region Container comprises an identifier of object 170 corresponding to a vehicle, but does not comprise the number of objects in the region, the description of region 151 in the Perception Region Container does not comprise any object identifier and indicates that the region comprises zero object, the description of region 152 in the Perception Region Container comprises an identifier of object 171 corresponding to a vehicle and indicates that the region comprises one object, the description of region 153 in the Perception Region Container comprises an identifier of object 172 corresponding to a vehicle and indicates that the region comprises one object, and the description of region 160 in the Perception Region Container comprises an identifier of object 180 corresponding to a pedestrian and indicates that the region comprises one object.

In the case where many objects of a perception area are to be reported, the use of regions helps the receivers to analyse the scene and to focus on regions that are important for the receivers, it being noted that as the CPMs are broadcasted, the CPM content is the same for all receiving ITS-Ss.

For the sake of clarity, "the instance of a perception region", "the perception region instance", or "the perceptionRegion instance" is used to designate "the instance of the perception region datafield contained in the perception region container". Similarly, "the instance of a perceived object", "the perceived object instance", or "the perceivedObject instance" is used to designate "the instance of the perceived object datafield contained in the perceived object container".

In addition, "perceptionRegionContainer", "perception Region container", or "Perception Region Container" is used to designate the perception region container.

Similarly, "perceivedObjectContainer", "perceivedObject container", or "Perceived Object Container" is used to designate the perceived object container.

It is observed that the CPM specification defines dominating regions and dominated regions when regions overlap. If two perception regions overlap and involve the same sensor (as described in the sensorldList data element of the PerceptionRegion), the perception region added later to the PerceptionRegionContainer is referred to as dominating and the other region is called dominated. In order to reduce communication channel load, when describing the regions, a list of identifiers of perceived objects (perceivedObjectlds) is provided in the dominating region rather than in a dominated region. Perceived objects are only referenced in the component perceivedObjectlds in the most dominating region at the reference location of the object. However, the number of perceived objects (numberOfPerceivedObjects) are indicated in the dominating regions and in the dominated regions.

### ITS stations

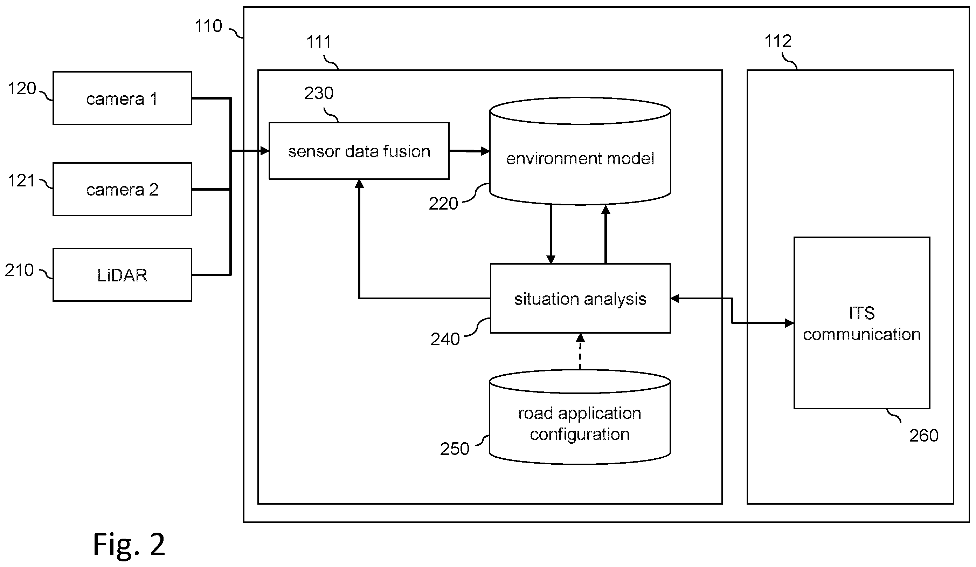

**Figure 2** illustrates a schematic representation of the architecture (or of a portion of the architecture) of a device generating CPMs, for example RSU 110 comprising analytic module 111 and ITS-S 112 as illustrated in Figure 1.

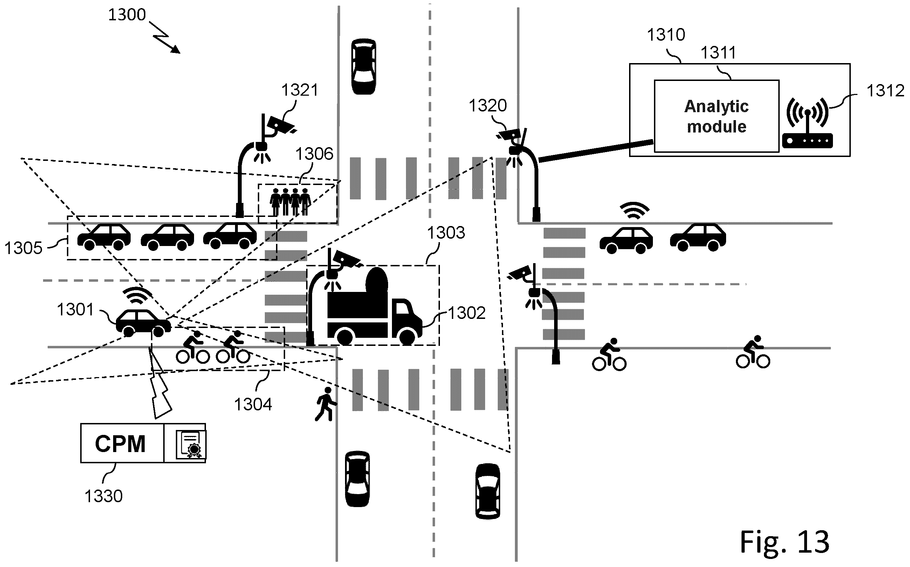

While Figure 2 is described in relation to RSU 110 for the sake of clarity, the architecture illustrated in Figure 2 applies to other types of devices generating CPMs, as described with reference to Figure 13, except that road applications are generally specific to RSUs. Regarding an embedded ITS-S, splitting a perceived area into perception regions is mainly based on perceived objects, except if the ITS-S has access to a static description of the perceived area such as when MAPEM containing the road topology are received by the ITS-S (in general).

As illustrated, analytic module 111 is connected to one or more sensors, for example to cameras 120 and 121 and to LiDAR 210. The sensors (e.g., cameras, lidar, radar, etc.) may be located nearby the road for a roadside ITS-S or may be embedded inside a vehicle.

The objects detected by each sensor may be analysed by a Sensor data fusion module such as Sensor data fusion module 230. In addition to the local sensor data, the sensor data fusion may also use information contained in ITS messages transmitted by other ITS-Ss located in its neighbourhood, that are received by an ITS communication module, for example ITS communication module 260. Such a Sensor data fusion module may fuse objects detected by several sensors if there is enough confidence that they are the same objects (e.g., by analysing their object type, their position, their speed, their trajectory, etc.). Newly detected objects or new items of information directed to tracked objects are then used to update an environment model such as environment model 220.

The environment model comprises a list of objects, this list containing information for each tracked object such as:
- a unique object identifier (ID) to track the object,
- a time at which measurements of the object have been obtained,
- a list of sensors that have perceived the object,
- a position and speed of the object enabling to compute the relative distance and speed of the object from an ITS-S reference position, with a corresponding confidence level,
- a type of object (e.g. vehicle or pedestrian), with a corresponding confidence level,
- a map position associated with the object position. The map position may be provided in reference to a MAPEM (as specific in ETSI TS 103 301 V2.1.1),
- an associated ITS station identifier, with a corresponding confidence level, and/or
- the last inclusion time of the object in a transmitted CPM.

In addition to the list of objects, a set of relevant perception regions are processed by a Situation Analysis module such as Situation Analysis module 240. The situation analysis module may enrich the environment model (e.g., environment model 220) with a list of tracked regions. For each region, the following items of information may be stored and may be used when items of information about a region are to be reported in a CPM:
- a time at which measurements of the region have been obtained,
- a 2D or 3D geometry shape of the region to define the geometry of the region,
- a perception confidence level in the region,
- a list of sensors that have perceived the region,
- a list of objects contained in the region (e.g., identified by their unique object ID), and/or
- a number of objects contained in the region.

According to some embodiments of the disclosure and in order to handle inclusion of regions in CPMs, some or all of the following items of information may be added for each region:
- a unique region identifier to track the region (it being noted that it is preferably an ITS-S-specific identifier (or internal identifier), that is not part of the CPM Perception Region Container, following ETSI TS 103 324 V2.1.1). In future evolution of this specification, the region identifier could be added in CPMs, in particular to facilitate tracking of the regions at the receiver's end,
- a list of map positions associated with the region geometry. The map positions may be provided in reference to a MAPEM (as specific in ETSI TS 103 301 V2.1.1), it being noted that the map position items of information that are associated with a region are ITS-S-specific items of information (or internal items of information), that are not part of the CPM Perception Region Container, following ETSI TS 103 324 V2.1.1. In future evolution of this specification, the list of map positions could be added into CPMs,
- the last inclusion time of the region in a transmitted CPM,
- a region inclusion priority representing a level of priority to include a region in future CPMs. For the sake of illustration, the following values could be used to define the inclusion priority (naturally, other values could be used):
   0: no inclusion,
   1: low level priority for inclusion,
   2: medium level priority for inclusion, and
   3: high level priority for inclusion,
- a mode of reporting regions. For the sake of illustration, the following reporting mode flags option may be used (naturally, other flags may be used):
   numberOfObjectEnable: if set to true, the items of information contained in a CPM, for the region, contains the number of objects and
   perceivedObjectldsEnable: if set to true, the items of information contained in a CPM, for the region, contains the list of object identifiers contained in the region;
- a list of region identifiers of the regions overlapping the considered region, and/or
- a region overlapping order representing the order of the regions in the set of overlap regions, in case of overlapping regions only. For the sake of illustration, the most dominating region may be indicated by the 0 value, the next one by the 1 value, and the highest value is for the most dominated region. Naturally other values and/or other schemes may be used.

Back to Figure 2, in addition to the environment model, a road application configuration such as road application configuration 250 may contain a description of the road topology and the settings applicable to the situation to be analysed. In case of a roadside unit, the road topology may comprise items of information such as the one used in a MAPEM (ETSI TS 103 301 V2.1.1) to describe the road segments and the road intersections.

The selection of regions and objects to be reported may be determined by the situation analysis module 240 and transmitted to CPM Communication module 260 that generates and transmits CPMs, for example as specified by CPM specification ETSI TS 103 324 v2.1.1. Such messages may be broadcasted periodically to all the ITS-Ss in the neighbourhood of ITS-S 112.

ITS-S 112 may also receive CPMs transmitted by other ITS-Ss. Received information is passed to the situation analysis module. According to some embodiments of the disclosure, received CPMs provide an organisation of the items of information using perception regions to ease the receiver analysis.

### Collective Perception Message (CPM)

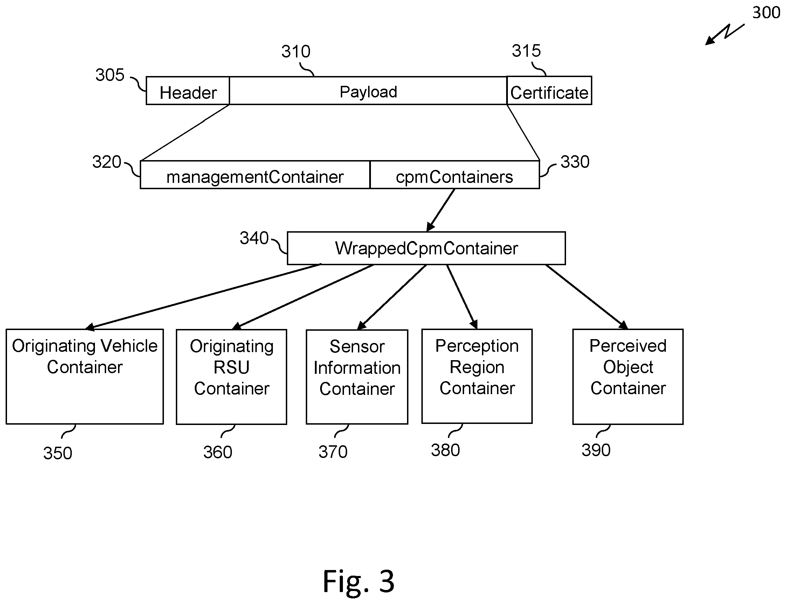

**Figure 3** illustrates an example of a structure of a Collective Perception Message, CPM 300.

The illustrated CPM structure is based on ETSI TS 103 324 v2.1.1 specification. It comprises an ITS Protocol Data Unit (PDU) header 305, a payload 310, and a Certificate 315. It is observed that the disclosure is not specific to this version of CPMs and may apply to different versions of CPMs. In particular, the disclosure may apply to CPMs containing data associated with at least one region.

Header 305 is a common header that includes information about the protocol version, the message type, and the ITS-S identifier (ID) of the originating ITS-S.

Payload 310 contains a management container referenced 320 and a cpmContainers component 330, which itself comprises a Wrapped CPM container 340. Wrapped CPM container 340 may contain various kinds of containers such as the following: Originating Vehicle Container 350 (which is present if the CPM is emitted by a vehicle), Originating RSU Container 360 (which is present if the CPM is emitted by an RSU), Sensor Information Container 370 (which describes information about the sensors used to generate the considered CPM), a Perception Region Container 380 (which contains some instances of the perception Region datafield which describes some regions), and a Perceived Object Containers 390 (which describes the objects perceived through the sensors).

The items of information contained in the Perceived Object Containers 390 can be obtained from an environment model (e.g., environment model 220 in Figure 2) of the ITS-S originating the CPM.

The items of information contained in the Perception Region Container 380 are prepared by a situation analysis module (e.g., situation analysis module 240 in Figure 2). The regions may be generated dynamically or statically depending on the application and on the conditions (e.g., traffic data). For example, an application that aims at monitoring a pedestrian cross-walking would define a static region around the crosswalk area.

As defined in TS 103 324 v2.1.1 specification, in § 6.1, CPMs are generated during periodic CPM generation events. The time elapsed between the triggering of consecutive CPM generation events is equal to T_GenCpm, that is comprised between T_GenCpmMin and T_GenCpmMax. During each generation event, the inclusion of the SensorlnformationContainer, PerceivedObject, and Perception Region are determined based on inclusion rules. Based on these inclusion rules, each generation may result in the generation of none, one, or a set of CPMs. In the case where the data to be transmitted in a CPM exceed a maximum size (MTU_CPM) for a CPM, these data are transmitted in a set of CPMs, also called CPM segments.

It is an object of the present disclosure to optimise the inclusion of regions and objects in CPMs to provide efficient and useful information to the receiving ITS-Ss while avoiding overloading the radio communication channel.

The management container includes the component referenceTime and referencePosition. The referencePosition refers to the position of the ITS-S disseminating the CPM. The management container includes information about the data segment contained in the CPM as part of the component messageSegmentlnfo, if more than one CPM is assembled from the data selected for transmission.

The Sensor Information Container lists information about individual sensors or sensor systems which originated the perceived object information using the type Sensorlnformation. SensorInformation includes the following items of information:
- a component sensorld that is used in the PerceivedObjectContainer or PerceptionRegionContainer to connect information about an object or region to the sensor that provided that information,
- a component sensorType that provides the type of sensor,
- a component perceptionRegionShape that defines the shape of the perception area of the sensor, it is specified as a geographical area or volume with respect to the reference position,
- a component perceptionRegionConfidence that describes the sender's confidence level for correctly detecting objects and unoccupied subregions present in a perception region, and
- a component shadowingApplies that indicate the application of the shadowing mechanism within the given perceptionRegionShape. If the perceptionRegionConfidence provided in SensorInformation is not valid for shadowed regions in the given perceptionRegionShape, shadowingApplies is set to "True" for this Sensorlnformation. If the perceptionRegionConfidence provided in SensorInformation is also valid for shadowed regions in the given perceptionRegionShape, shadowingApplies is set to "False" for this SensorInformation.

It is observed that not all the objects known to a transmitter are reported in every CPM. The receiver therefore has to ensure that suitable tracking and prediction mechanisms for previously transmitted objects are employed to update the shadowed region accordingly.

It is also observed that the perception capabilities specified in the SensorInformation (i.e. perceptionRegionShape, perceptionRegionConfidence, shadowingApplies) can be detailed or overruled using Perception Region.

According to an embodiment of the disclosure, the list of perception regions identifiers, as defined in the Perception Region Container, corresponding to the perception zone of the sensor, may be added optionally in a PerceptionRegionlds of the Sensorlnformation.

A Perception Region Container lists information about perception regions using the type Perception Region. Perception Region is a datafield which includes the components measurementDeltaTime, perceptionRegionConfidence, and perceptionRegionShape for a specific perception region. It is observed that a Perception Region may be used to indicate a perceptionRegionConfidence different from the perceptionRegionConfidence given in the Sensorlnformation, or to mark regions where the shadowing model does not apply. The component perceptionRegionShape is specified as a geographical area or volume with respect to the reference position (in case of a vehicle ITS-S disseminating the CPM) or a reference point (in case of a roadside ITS-S disseminating the CPM) in the East-North-Up coordinate system. Additionally, a PerceptionRegion may be used to divide the perception region of a sensor into smaller parts, e.g. if more than one CPM needs to be assembled. PerceptionRegion includes the component shadowingApplies to indicate the application of the shadowing mechanism within the given perceptionRegionShape. The shadowingApplies applies for the Perception Region as stated for the SensorInformation. Perception Region may include the component sensorldList. If present, sensorldList lists the values of the component sensorld of the sensors described in the SensorInformation which are involved in perceiving the region.

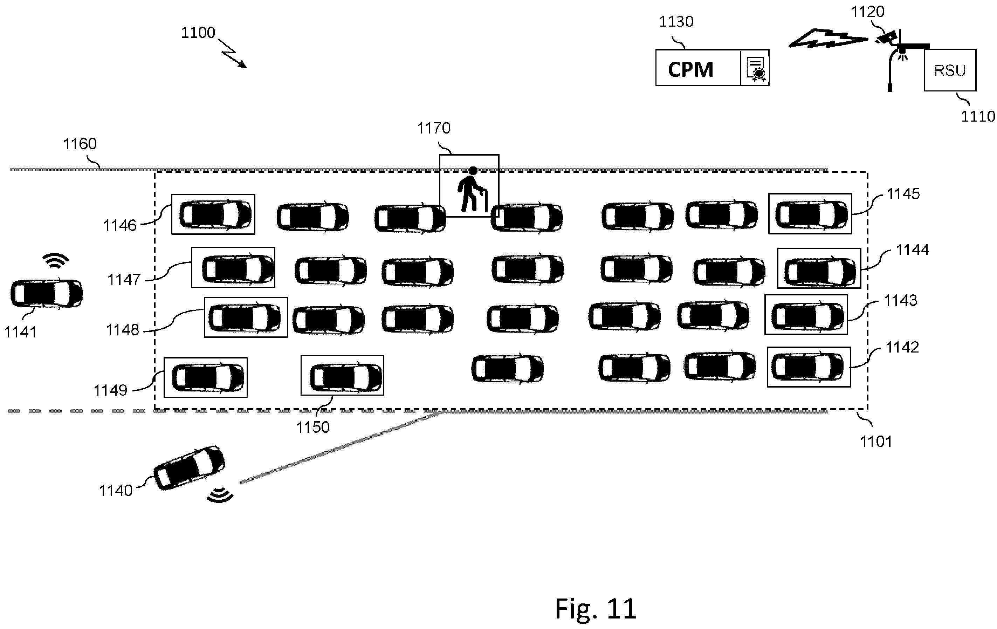

Perception Region may include the component (or field) numberOfPerceivedObjects. If present, numberOfPerceivedObjects contains the number of all currently perceived objects in the Perception Region. Perception Region may include the component (or field) perceivedObjectlds. If present, perceivedObjectlds lists the values of the component (or field) objectld of all or some perceived objects that are contained in PerceptionRegionShape that are not dominated by any other Perception Region. Thus, each objectld is contained in at most one Perception Region, while the value of numberOfPerceivedObjects may be higher than the number of elements in perceivedObjectlds. The objectlds are not repeated in all the overlapping regions they belong to so as to reduce the communication channel load. Providing only the values of the component (or field) objectld of some perceived objects that are contained in PerceptionRegionShape that are not dominated by any other Perception Region makes it possible to reduce the size of the CPMs, as described hereafter, for example by reference to Figure 11.

According to an embodiment of the disclosure, an identifier of the perception region may be added optionally in a PerceptionRegionld field, making it possible to track a region.

The Perceived Object Container includes the component numberOfPerceivedObjects, describing the total number of perceived objects contained in the Local Dynamic Map (environment model) at the time of generating the CPM. It is observed that depending on the message generation rules and the associated object inclusion scheme, the number of objects described in a CPM may be different from the value of numberOfPerceivedObjects.

The Perceived Object Container includes the component perceivedObjects to provide information about each perceived object that is selected for transmission. Each selected perceived object is described in a perceivedObject datafield with information about its kinematic state and attitude vector in a predefined coordination system and with respected to a referenceTime defined in the management container. It includes the following components (or fields):
- objectld which is a unique identifier assigned to the object (unique at the level of the CPM sender),
- measurementDeltaTime that represents the time difference from the reference time to the time of measurement of the object,
- position that represents the position of the object within the predefined coordinate system,
- velocity (optional) that is the velocity vector of the object within the pre-defined coordinate system,
- acceleration (optional), that is the acceleration vector of the object within the pre-defined coordinate system,
- angles (optional) that represent the Euler angles of the object bounding box at the time of measurement,
- zAngularVelocity (optional) that is the angular velocity of the object around the z-axis at the time of measurement,
- lowerTriangularCorrelationMatrices (optional) that is a set of lower triangular correlation matrices for selected components of the provided kinematic state of attitude vector,
- objectDimensionZ (optional) that is the z-dimension of the object bounding box,
- objectDimensionY (optional) that is the y-dimension of the object bounding box,
- objectDimensionX (optional) that is the x-dimension of the object bounding box,
- objectAge (optional) that is the age of the detected object (the difference in time between the moment it has been first detected and the reference time of the message, the maximum value being 1.5s),
- objectPerceptionQuality (optional) that represents the confidence associated to the object,
- sensorldList (optional) that lists the identifiers of the sensors which provided the measurement data,
- classification (optional) that is a classification of the described object (type of the object such as VRU, vehicle, etc), and
- mapPosition (optional) that indicates a position on a topology description transmitted according to MAPEM ITS message (according to TS 103 301 V2.1.1 specification).

The CPM specification has defined rules for the inclusion of each container in a CPM at the next generation event. The goal is to keep the communication channel with a reasonable load.

A CPM includes a SensorlnformationContainer in the first generated CPM and whenever the time elapsed since the last time a CPM included a SensorlnformationContainer is equal or greater than T_AddSensorinformation (which default value is one second).

A CPM includes a perception region whenever the sender detects relevant deviations of the available dynamic perception capabilities (perceptionRegionShape, perceptionRegionConfidence, shadowingApplies) with respect to the static perception capabilities described in the Sensor Information Container or previously included Perception Region Containers. If two perception regions overlap and involve the same sensor (as described in the sensorldList of the Perception Region), the perception region instance added later to the PerceptionRegionContainer is referred to as a dominating region, i.e. it defines the perception region confidence and the shadowingApplies value of the intersection between the two regions. Additionally, perceived objects are only referenced in the component perceivedObjectlds in the most dominating region at the reference location of the object. As described above, the other region is called the dominated region. To reduce the load on the communication channel, the number of Perception Region instances in the Perception Region Container is limited to MaxPerceptionRegions and the amount of data contained in the Perception Region Container is limited so that the Sensor Information Container and the Perception Region Container may fit into one CPM.

According to some embodiments of the disclosure, inclusion of the regions is prioritised by the situation analysis module 240, based on the analysis of the traffic situation. Still according to some embodiments of the disclosure, inclusion of the regions may be scheduled over multiple CPMs generation events to overcome the maximum perception regions limit.

A CPM includes available information about perceived objects inside the perceivedObjectContainer using one instance of PerceivedObject per object in accordance with their type.

The perceived object inclusion rules depend on the object type and on the object perception quality. Two object types are defined based on the object class with the highest classification confidence, as follows:
- Type-A objects are objects of class vruSubclass with a VRU profile pedestrian, bicyclistAndLightVruVehicle or animal or class groupSubclass or otherSubclass and
- Type-B objects are objects of any class not included in Type-A (i.e. objects of class vehicleSubclass, or vruSubclass with a VRU profile motorcyclist).

An object whose object perception quality exceeds ObjectPerceptionQualityThreshold is selected for transmission from the object list as a result of the current CPM generation event if the object complies to any of the following conditions:
- if the object is of Type-A:
   - the object has first been detected by the perception system after the last CPM generation event or
   - if the object list contains at least one object of Type-A which has not been included in a CPM for a time equal or larger than T_GenCpmMax/2, all objects of Type-A should be included in the currently generated CPM,
- if the object is of Type-B:
   - the object has first been detected by the perception system after the last CPM generation event,
   - the Euclidean distance between the current estimated position of the reference point of the object and the estimated position of the reference point of this object lastly included in a CPM exceeds minPositionChangeThreshold (having a default value set to 4 m),
   - the difference between the current estimated ground speed of the reference point of the object and the estimated absolute speed of the reference point of this object lastly included in a CPM exceeds minGroundSpeedChangeThreshold,
   - the orientation of the object's estimated ground velocity at its reference point has changed by at least minGroundVelocityOrientationChangeThreshold since the last inclusion of the object in a CPM, or
   - the time elapsed since the last time the object was included in a CPM is equal or larger than T_GenCpmMax.

All container data selected for inclusion in a CPM are assembled and encoded for transmission using ASN.1 encoder. When the encoded data exceeds a maximum size (MTU_CPM), a set of CPMs (or CPM segments) are generated, all having the same reference time.

CPM assembly is performed taking these size constraints into account by following one of the following configuration-specific assembly mechanisms:
- if the configuration parameter MessageAssemblyConfig is set to "0", the CPM assembly is performed based on an object utility function and
- if the configuration parameter MessageAssemblyConfig is set to "1", the CPM assembly is performed based on the perception regions selected for inclusion.

If the SensorlnformationContainer or the Perception Regions needs to be transmitted, it is added to the first CPM generated for transmission.

Perceived objects selected for transmission are included in CPMs in a descending priority order following a per-object utility function based on the following parameters: object perception quality, object position change, object speed change, object orientation change, and object last inclusion time.

In the case where the SensorlnformationContainer also needs to be transmitted, it is added to the first CPM transmitted.

Every set of overlapping perception regions and the objects selected for inclusion contained within these regions are included into the same CPM segment. If the MTU_CPM does not allow to transmit this set of information in the same CPM segment, the regions are divided into smaller regions, so that each separate region and the corresponding perceived objects contained within them fit into one CPM segment.

As long as the resulting ASN.1 UPER encoded CPM to be generated does not exceed MTU_CPM a CPM should be populated in arbitrary order with perception regions and the corresponding perceived objects selected for transmission within these regions in the same CPM and with perceived objects that are not contained in any of the transmitted perception regions. These perceived objects are added in the order as defined in object utility function assembly method, and may be spread over several assembled CPMs.

As apparent from the above, the standard specification inclusion rules do not establish any link between the object inclusion rules and the region inclusion rules. However, the inventors have observed that there exist many use cases for which an object inclusion may be optimized if coupled with the region the object belongs to.

### Determining region and/or object reporting policy

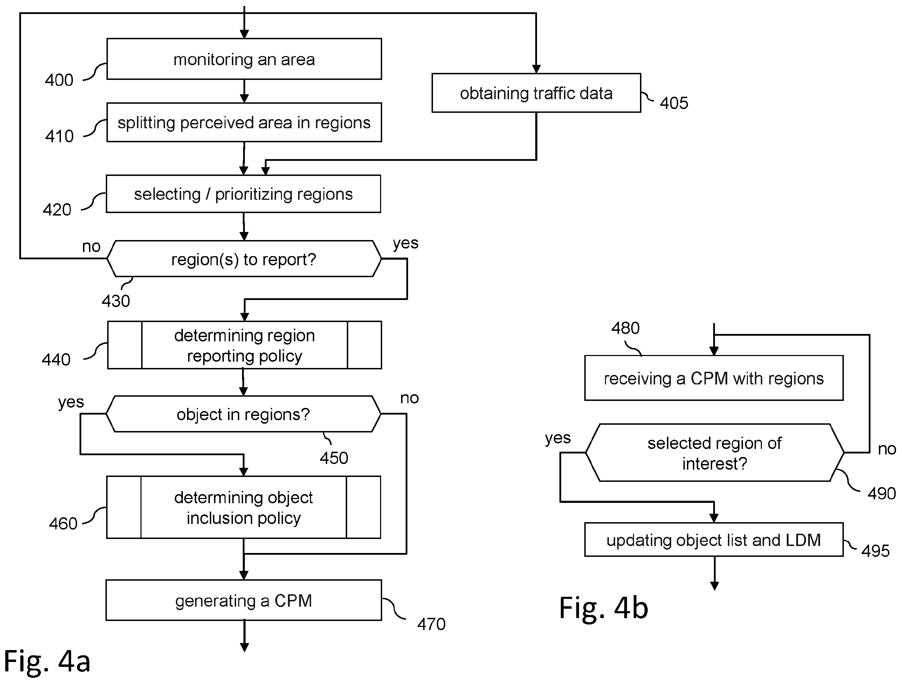

**Figure 4****,** comprising Figures 4a and 4b, illustrates an example of steps of methods for generating CPMs and for processing received CPMs.

**Figure 4a** illustrates an example of steps of a method carried out in an ITS-S emitting CPMs according to some embodiments of the disclosure.

As illustrated, a first step is directed to monitoring an area (step 400) using sensors, such as cameras 120 and 121 in Figure 1, and an analytics module, such as analytic module 111 in Figure 1, and to updating an environment model, such as environment model 220 in Figure 2, using a list of perceived objects (e.g., vehicles, pedestrians, bicyclists, etc.).

In parallel, traffic data such as the traffic light phases are obtained (step 405). For the sake of illustration, traffic light phase and time may be obtained through ITS SPATEM as specified in ETSI TS 103 301 V2.1.1.

As illustrated, the perceived area is split into regions (step 410). According to some embodiments, the perceived area may be split into regions based on the topology of the monitored area, as described with reference to Figure 1. In such a case, the items of information used to create the regions may be obtained from a road application configuration, for example road application configuration 250 in Figure 2. In addition or according to some other embodiments, the perceived area may be split into regions based on the occupancy of the perceived area. In such a case, the criteria to be used may be the following:
- a number of objects,
- an absence of object (i.e., the free spaces), and/or
- a presence of a given type of object: for example, a zone comprising an emergency vehicle, a zone comprising a dangerous vehicle (e.g. a vehicle violating a red traffic light), or a zone of a motorway comprising a pedestrian.

Once the perceived area is split into regions, the situation analysis module, for example situation analysis module 240 in Figure 2, updates the description of the regions, that is stored in the environment model, for example in environment model 220 in Figure 2. When a new region is created, a unique identifier is assigned to the created region.

The items of information describing each region in the environment model, that are to be updated, may be the following:
- the last time of measurement,
- the geometry shape of the region,
- the perception confidence level,
- the list of the identifiers of the sensors used to perceive the region,
- the list of the identifiers of the objects perceived in the region, and/or
- the number of objects perceived in the region.

Next, the regions to report are selected from the list of regions created in step 410 and prioritized (step 420) using the traffic data obtained in step 405. Since the list of regions in the environment model may comprise a high number of regions and may not fit in a single CPM, the selection and prioritization of regions may be carried out as a function of the traffic situation.

If there are many objects and/or many regions to report in a CPM, the amount of data to be transmitted is increased. It is thus important to prioritize the items of information to be included in CPMs to reduce the load on the wireless network. The selection and prioritization may be based on the dynamic of the activity inside the regions or near the regions.

For a road application processing data of an ITS-S monitoring an area comprising a traffic light, the regions may be selected and prioritized as a function of the traffic light phases.

For the sake of illustration and turning back to Figure 1, if the traffic light is green for the lanes where vehicles 170 and 172 are driving, regions 150, 151, 152, and 153 and the central region 145 are the most active areas in terms of vehicle movement. Likewise, regions 162 and 163 are the most active areas in terms of pedestrian movement.

Based on the object utility inclusion rule defined in CPM specifications ETSI TS 103 324 v2.1.1, the fastest-moving objects are the ones that need to be included the most frequently. However, this assumption is questionable and there are also situations where the perceived objects that are moving slowly or that are stopped should be reported promptly to fast-approaching vehicles. Such a situation is encountered in toll barrier on highway for instance. Accordingly, to improve safety, the approaching vehicles should be warned of the presence of slow of stopped vehicles in advance to slow down or to anticipate the selection of a waiting lane with less vehicles.

Other criteria to prioritize the regions to report is the change of the region occupancy. For instance, if a region was previously reported as empty (no object inside) and is no longer empty, it may be important to warn the receiving ITS-Ss about this change.

As a result of the selection and prioritization step, the region inclusion reporting priority is updated in the environment model. As an example, highest priority regions are indicated with the value of 3 and regions not selected for inclusion are indicated with the value of 0. Regions with a low level or a medium level of priority may be indicated with the value 1 and 2, respectively.

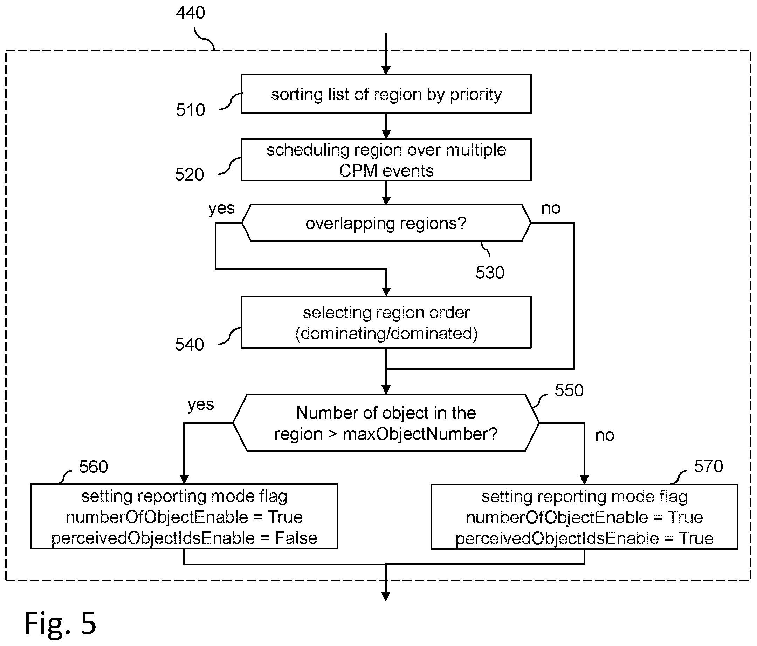

If there is at least one region to report (step 430), the region reporting policy is determined (step 440). Determining the region reporting policy is described in detail by reference to Figure 5.

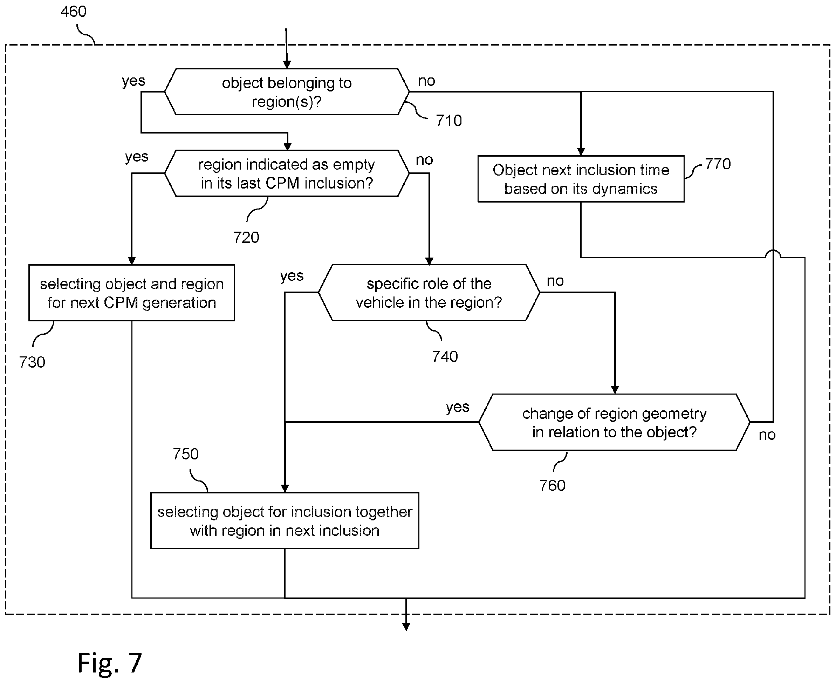

After having determined the region reporting policy and if there is at least one object in a selected region to report (step 450), the object reporting policy is determined (step 460). Determining the object reporting policy is described in detail by reference to Figure 7.

It is observed here that according to the state-of-the art, the objects are included in CPMs based on their dynamics.

As defined in TS 103 324 v2.1.1, CPMs are generated during periodic CPM generation events. The time elapsed between the triggering of consecutive CPM generation events is equal to T_GenCpm that is equal to or greater than T_GenCpmMin and equal to or lower than T_GenCpmMax. Typical values are 100 ms for the minimum inclusion time for a vehicle ITS-S and could be down to 50 ms for a roadside ITS-S. Upper limit for the inclusion is typically 1,000 ms. Therefore, assuming that the T_GenCpmMax is equal to one second, a stopped vehicle or a vehicle travelling at less than 15 km/h is reported every second based on the object utility inclusion rules defined in ETSI TS 103 324 v2.1.1.

Since this period may be too low, the object inclusion rule may be modified so that the next inclusion time to the next generation event is based on the following criteria:
- the role of the object in the region and
- a change of the region state where the object was located since the last inclusion of the object in a CPM.

After having determined the region reporting policy and the object reporting policy, CPMs may be generated (step 470).

**Figure 4b** illustrates an example of steps of a method carried out in an ITS-S for processing received CPMs according to some embodiments of the disclosure.

After having received a CPM reporting at least one region (step 480), a test is carried out to determine whether the received CPM reports at least one region of interest (step 490).

If the received CPM does not report a region of interest, the ITS-S waits for the next CPM. On the contrary, if the received CPM reports a region of interest, the list of objects and the local dynamic map are updated (step 495).

**Figure 5** illustrates an example of steps of a method for determining reporting policy of regions, corresponding to step 440 in Figure 4. These steps may be carried out by a situation analysis module, for example situation analysis module 240 in Figure 2.

As illustrated, a first step (step 510) is directed to sorting the list of perception regions as a function of their inclusion priority, for example as determined in step 420 (as described above, the road monitoring application may provide, during selection and prioritization step 420, the region priority level that may be used as input to determine the reporting frequency of a region).

When there are many objects or many regions to report in a CPM, a CPM segmentation may be required. During the segmentation, regions and associated objects selected for transmission should be in the same CPM segment. Therefore, if one CPM segment is loss, other CPM segments received by an ITS-S may be used to get information about the regions described in the received CPM segments. In addition, according to TS 103 324 v2.1.1, if region overlaps, they must be transmitted in the same CPM segment. In the case of a high amount of data to transmit for a given region, the region must be split into subregions so that subregions and the associated objects fit in the same CPM segment.

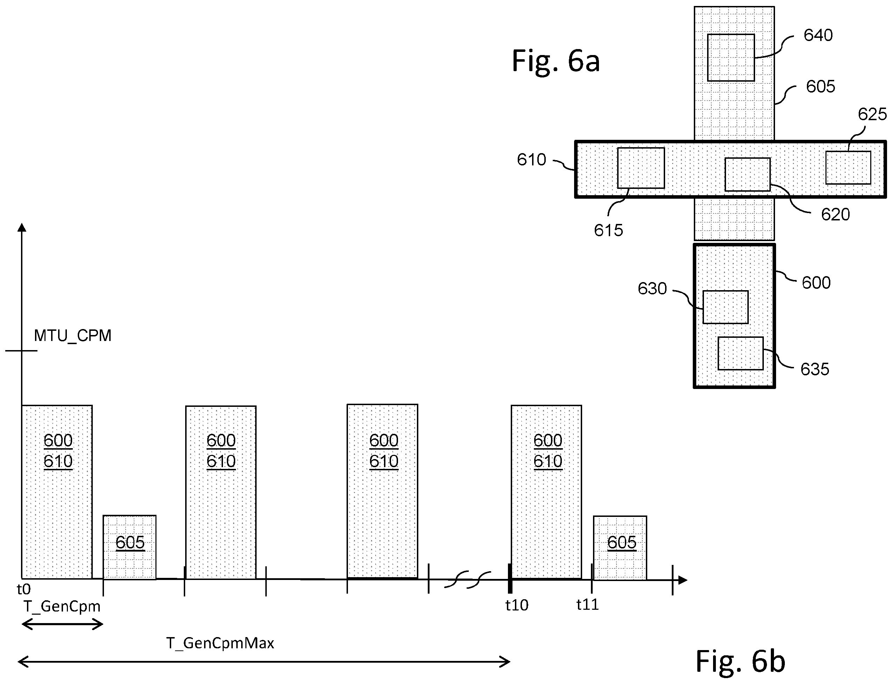

According to some embodiments of the disclosure, the regions selected in step 420 can be included alternatively over multiple CPM generation events, according to their priority but also for regions having the same priority. This avoid segmenting the CPM and creating subregions. As a consequence, the way a perceived area is split in regions is the same for a receiving ITS-S, as the one defined by the road application, that is done to ease the understanding of the traffic situation and to provide in priority items of information regarding the more useful regions and objects. To that end, reporting of the regions to report is scheduled on multiple CPM generation events (step 520), as a function of the priority of the regions, as illustrated with reference to Figure 6.

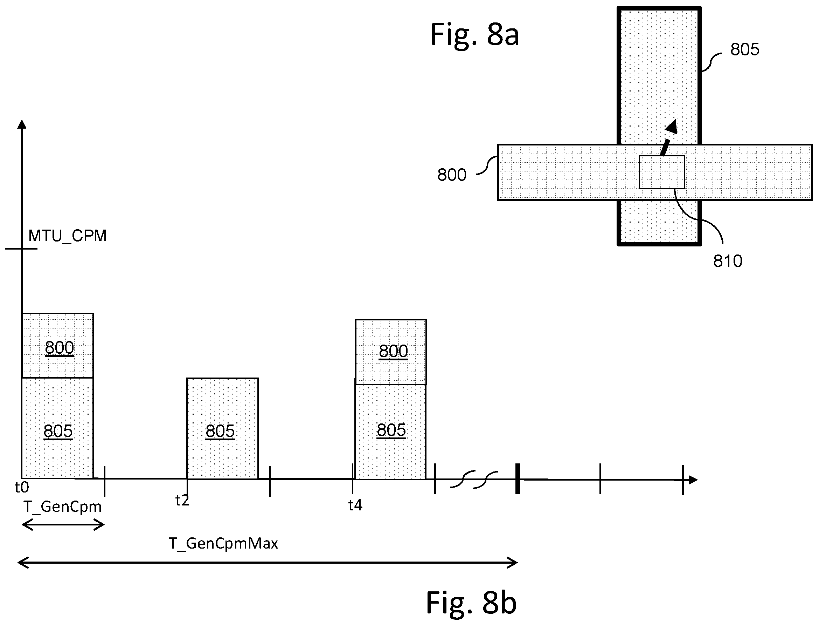

Next, in step 530, it is determined whether some of the regions to report in the same CPM are overlapping. If some of the regions to report are overlapping, the region to be considered as the most dominating is selected (step 540). According to some embodiments, the most dominating region is the most frequently reported region. As the perceived object identifier should be only indicated in the most dominating region, this avoids switching between regions for the reporting of the object identifiers when the overlapping regions are not indicated in the same CPM. Step 540 is described in more detail by reference to Figures 8a and 8b.

Next, the data to be reported for describing the region occupancy, for each perception region to be reported, are checked.

If it is determined (step 550) that the number of objects contained in the region is higher than a maximum number of objects per region denoted maxObjectNumber, the reporting method to be used for reporting the region does not include the list of perceived object identifiers. To that end, the flags for the reporting method of the region are set as following during step 560:
- numberOfObjectEnable = True and
- perceivedObjectldsEnable = False

Accordingly, the Perception Region Container comprises only the number of objects which has a fixed data size in the CPM (for example, the range value for the number of objects may be set between 0 and 255, which needs 1 byte of data to represent it).

On the contrary, if it is determined that the number of objects contained in the region is not higher than the maxObjectNumber value and if the application decides to add the list of perceived object identifiers in the information describing the region in the CPM, the flags for the reporting method of the region are set as following during step 570:
- numberOfObjectEnable = True and
- perceivedObjectldsEnable = True

Accordingly, the Perception Region Container comprises the number of objects which has a fixed data size in the CPM and 2 bytes of data per perceived object if it is assumed that the object identifiers are comprised between 0 and 65635.

The value maxObjectNumber may be a fixed value (for example, the value could be above 10 objects) or computed at each generation events, for example based on the total size of data selected for transmission.

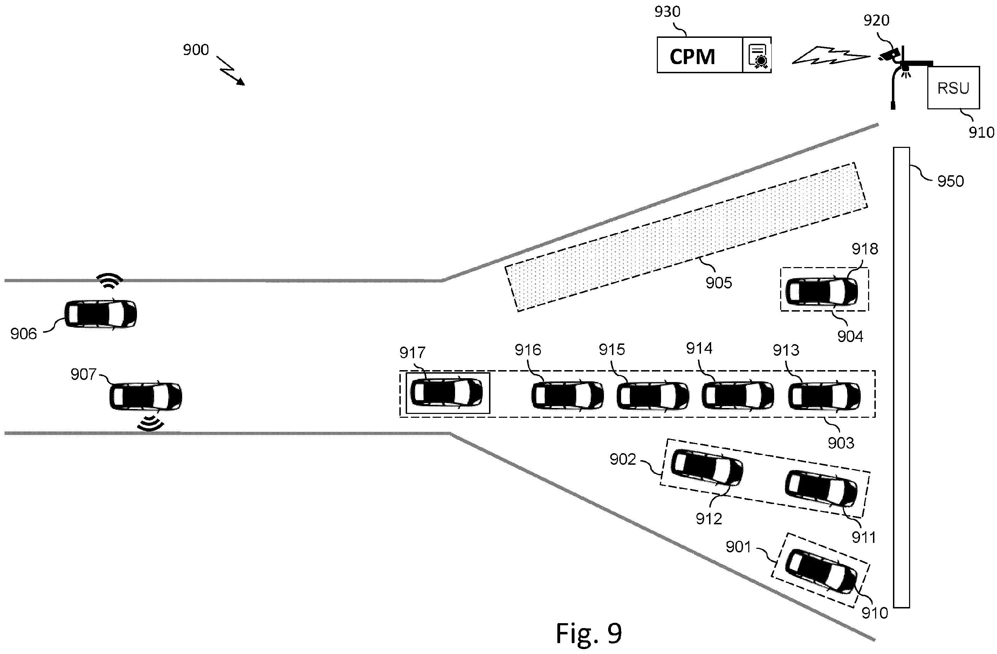

According to another embodiment of this disclosure, the size of the data field perceivedObjectlds could be reduced by including only a subset of identifiers of objects contained in the region with a specific role in the region (as illustrated in Figure 9).

**Figure 6****,** comprising Figures 6a and figure 6b, illustrates scheduling of reporting regions over multiple CPM events, for example as done in step 520 in Figure 5.

For the sake of illustration, Figure 6a represents a perception area having three regions referenced 600, 605, and 610. Still for the sake of illustration, region 600 comprises objects 630 and 635, region 605 comprises objects 620 and 640, and region 610 comprises objects 615, 620, and 625. It is assumed that regions 600 and 610 have the priority level set to high as a result of the region selection step (e.g., step 420 in Figure 4), as represented in Table 2 in the Appendix. It is also assumed that the objects are moving very slowly and that they have changed the region they belong to during the period of observation. In addition, as illustrated, regions 605 and 610 are overlapping.

Figure 6b illustrates the scheduling over multiple CPM generation events of inclusion of the regions and their objects. According to this example, the CPM segmentation is avoided and regarding the overlapping regions, there is no need to split them in subregions so that the regions and objects fit in the same CPM.

Table 3 in the Appendix provides a high-level description of the content of the generated CPMs according to this example:
- at time t0, the regions 600 and 605 having the highest priority are included with their description in the Perception Region Container Part and the objects 615, 620, 625, 630, and 635 contained in these regions are also included in the same CPM in the Perceived Object Container part. The size of the data to be transmitted being less than the MTU_CPM maximum value, there is no need for CPM segmentation. It is noted that if the lower priority region (region 605) is to be reported during the same CPM generation event, CPM segmentation would be needed. Instead, the lower priority region is reported at time t1,
- at time t1, the lower priority region 605 is included in the Perception Region Container. Object 640, that was not yet reported, is also included in the Perceived Object Container since it is contained in region 605. Since the second object 620 contained in region 605 was already reported at the previous CPM event, it is not included again in this CPM generation event. However, the object identifier of object 620 is listed in the list of perceived object identifiers for the perception region 605,
- at time t2, t4, t6, t8, and t10, the highest priority perception regions are included in the generated event. Their objects are only included again in the Perceived Object Container at time t10 as they are moving slowly,
- at time t3, t5, t7, and t9 no region and no object were selected for inclusion thus no CPM is generated, and
- a time t11, the lowest priority region 605 is included as the maximum inclusion time T_GenCpmMax is reached for this region and the object 640 is included also in the Perceived Object Container.

According to some embodiments of the disclosure, the inclusion of regions in a CPM generation event is prioritized as decided by the road application.

If the ITS-S supports Multiple Channel Operations (MCO), the high priority regions may be transmitted over the main channel while other regions may be transmitted over alternative channels.

**Figure 7** illustrates an example of steps of a method for determining reporting policy of objects contained in regions, corresponding to step 460 in Figure 4.

As illustrated, a first step (step 710) is directed to identifying the belonging of each object to one or several regions.

If the object does not belong to a region previously reported in a CPM, the next time at which the object is to be reported in a CPM is determined (step 770), for example based on the object utility function (e.g., based on the object dynamics) as stated in TS 103 324 v2.1.1.

On the contrary, if the object belongs to a region previously reported in a CPM, it may be determined whether the object belongs to a region that was reported as empty in its last inclusion in a CPM (step 720).

If the object belongs to a region that was reported as empty in its last inclusion in a CPM, the object is selected for inclusion in the next CPM generation event whatever is the dynamic of the object (step 730). Accordingly, the disclosure makes it possible to warn receiving ITS-Ss about regions that are no longer free, as indicated in a previous CPM.

On the contrary, if the object belongs to a region that was not reported as empty in its last inclusion in a CPM, a test may be carried out to determine whether the object has a specific role in the region (step 740), for example whether the object corresponds to a vehicle having a specific role in the region.

Examples of specific roles may be directed to objects that are positioned at the border of a region. Other examples of specific roles may be directed to objects having a type that is different from the other objects in the region. For example, the presence of a pedestrian in a region containing stopped vehicles may lead to consider the pedestrian as having a specific role in this region.

If the object has a specific role for a region, it is selected to be included in the same CPM as this region (step 750).

Else, if the object has no specific role for a region, another test may be carried out to determine whether there is a change in the region geometry, that is linked to the current object (step 760). If there is a change in the region geometry, that is linked to the current object, the object is selected for inclusion in a next CPM, together with the region it belongs to (step 760). If there is no change in the region geometry, that is linked to the current object, the object utility function inclusion rules based on the object dynamics are used (step 770).

Accordingly, the criteria to determine the next inclusion time to report an object in a CPM is not only determined by the dynamics of the object but also by characteristics of the perception region. This makes it possible to report an object based on its role in a region or based on a change of state of the region.

**Figure 8****,** comprising Figures 8a and figure 8b, illustrates scheduling of reporting overlapping regions over multiple CPM events, for example as described by reference to step 540 in Figure 5, for selecting the most dominating region.

Figure 8a represents two overlapping regions 800 and 805. One object 810 is initially contained in both regions 800 and 805, at time t0, and moves outside of region 800 (e.g., at time t5, object 810 is outside region 800, but still in region 805).

According to step 420 in Figure 4, it is assumed that region 800 is set to a low priority reporting level while region 805 is set to high priority reporting level.

Figure 8b illustrates the inclusion of regions 800 and 805 in CPM generation events.

According to TS 103 324 v2.1.1, if two perception regions overlap and involve the same sensor, the perception region added later to the PerceptionRegionContainer is referred to as dominating and perceived objects are only referenced in the perceivedObjectlds in the most dominating region at the reference location of the object, to reduce the message size. The other region is called dominated.

According to some embodiments of the disclosure, the region that is selected as the most dominating region is the region having the highest priority (i.e., the region that is the most often reported). As a consequence, the object identifiers indicated in the perceivedObjectlds are continuously referred by the same region until the objects leave the region.

Table 4 in the Appendix provides a high-level description of the content of the generated CPMs according to this example:
- at time t0, regions 800 and 805 are included with their description in the Perception Region Container Part and the object 810 contained in these regions is also included in the same CPM in the Perceived Object Container part. Since region 805 is the one having the higher priority, object 810 is reported in relation to this region in the Perception Region Container,
- at time t1 and t3, no region and no object were selected for inclusion thus no CPM is generated;
- at time t2, the highest priority perception region is included in the generated event. Its object is only included again in the Perceived Object Container at time t5 as it is moving slowly,
- at time t4, the perception regions are included in the generated event. Their objects are only included again in the Perceived Object Container at time t5 as they are moving slowly, and
- at the time t5, object 810 has left region 800. It is only in region 805. According to the determination step done in step 620 in Figure 6, region 800 and object 810 are included in the next CPM generation event to indicate the change of the state.

### Example of use cases

Figures 9 to 13 illustrate examples of use cases of splitting a perception area into regions and of determining dynamically the regions and the objects to report.

**Figure 9** illustrates a use case where an ITS system is used to monitor a tool barrier area.

As illustrated, ITS system 900 monitors tool barrier 950 using RSU 910 and camera 920.

The road application configuration (e.g., road application configuration 250 in Figure 2) is set to monitor the vehicle queues in front of each payment barrier.

According to this example, regions 901, 902, 903, and 904 are created when splitting the monitored area in regions, for example in step 410 in Figure 4, and their geometry is updated as a function of the length of the vehicle queue. Additionally, for the case according to which a queue is free of vehicle based on a pre-determined region, this region is created, for example region 905, to be reported as an empty region.

According to the illustrated example, region 901 only comprises vehicle 910, region 902 comprises vehicles 911 and 912, region 903 comprises vehicles 913 to 917, and region 904 only comprises vehicle 918.

When regions are selected as regions to be reported, for example in step 420 in Figure 4, the higher priority is given to the regions for which the length of the vehicle queue is higher than a given threshold. According to other embodiments, the priority is given as a function of the order of the regions that are ordered as a function of the number of vehicles in the region. The scheduling of the region to be reported may be determined as a function of the priority and of the data size, as described with reference to step 440 in Figure 4.

Regarding the objects contained in the regions, their inclusion priority may be determined as a function of their role in the region, as described in reference to step 460 in Figure 4. Table 5 in the Appendix illustrates the priority of the regions.

According to some embodiments, the last vehicle of a vehicle queue is always included with the region description, as being the more representative object of the region. For example, regarding region 903, vehicle 917 is considered, among all the vehicles 903 to 917 present in the region, as the most important and thus, it is selected for inclusion in the same CPM as the region.

At the first CPM generation event, if the data size is lower than MTU_CPM, all the regions describing the toll barrier are included with their objects. At each T_GenCpmMax, the complete reporting is sent again still if the size if lower than MTU_CPM. Otherwise, the regions are alternated on various T_GenCpm event as illustrated in Figure 7.

Table 6a in the Appendix illustrates the regions and objects selected for inclusion in successive CPM generation events at time t0, t1 (t1 = t0 + T_GenCpm), etc.

At each T_GenCpm_Max, the complete reporting on perception regions and perceived objects is transmitted in CPMs, for example in CPMs 930.

If vehicles such as vehicles 906 and 907 equipped with an ITS-S, receiving CPMs 930, are approaching tool barrier at high speed, they receive intermediate CPMs between two T_GenCpm_Max containing useful information for them to adapt their speed, in particular in view of region 903 containing many vehicles, and/or to select the best lane where to pass the toll barrier, in particular in view of region 905 that is empty.

According to this example, vehicle 917 is included more frequently in CPMs than others, to warn other vehicles in advance for them to anticipate the deceleration when approaching to the toll barrier. It is observed that according to Cooperative Awareness Service (e.g., TS 103 900 V2.1.1), a connected vehicle if stopped or driving slowly would transmit its ego position using CAM (Cooperative Awareness Message) each second (similar as T_GenCpm_Max value). Thanks to this disclosure, when a vehicle has a specific role as determined by the road application, this information about this vehicle may be transmitted more frequently using CPMs.

According to another aspect of this disclosure, information about empty regions where the vehicle could drive is also transmitted in CPMs to optimize the traffic flow when approaching the toll barrier.

Therefore, Perception Region also allows to report about a region occupancy:
- by indicating the number of objects in the region using the component numberOfPerceivedObjects,
- by indicating the list of perceived object Ids using the component perceivedObjectlds.

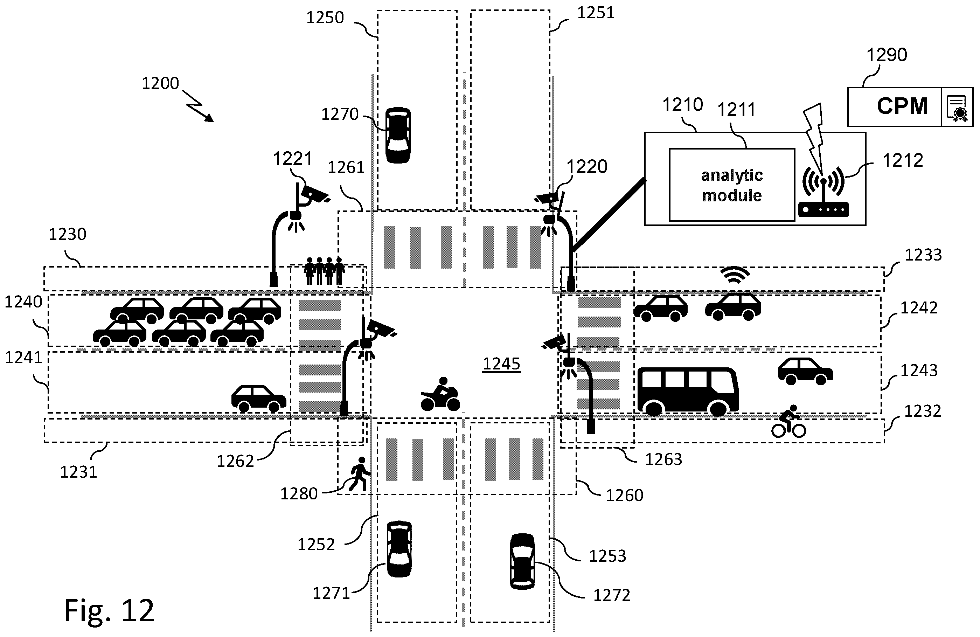

The creation of regions by the road application can help to organise the information in CPM especially in case where there are many objects to report. The road application can create regions based on the road topology: cross walk area, bicyclist lanes, etc (see Figure 12).

When the number of perception regions is higher than the maximum number of perception regions (MaxPerceptionRegions default value set to 8 in Annex F of TS 103 324 V2.1.1), according to the value of information defined by the road application, it is possible to include perception regions over successive CPMs to overcome this rule and to reduce the load on the communication channel. When there are many objects to report the component numberOfPerceivedObjects can be used to keep message size compact.

The road application can also create regions dynamically based on the occupancy level: empty area, area with many objects such as a traffic jam or vehicle queue length in front of a toll barrier (see Figure 9).

In use cases with many objects to report, the split into regions can provide useful information about the current situations by indicating the region occupancy in terms of number of objects and/or the list of perceived object Ids.

When there are many objects in the region, the numberOfPerceivedObjects is preferred to keep message size compact.

In the example of a vehicle queue waiting at a toll barrier, according to the object utility function specified in clause 6.1.3.2, slow vehicles would be included at 1 Hz in CPM. Connected vehicles approaching to the toll barrier could better anticipate the lane selection or the speed slow down if the information is sent at higher frequency.

To reduce the load on the communication channel, the situation could be reported using Perception Regions (such as 901, 902, 903, 904 and 905) to report about the number of objects on each lane.

Additionally, only the most meaningful objects, such as the latest vehicles on the lane (910, 912, 917 and 918) could be selected for transmission at a higher frequency than the one described in the current clause 6.1.3.2. The inclusion of the last vehicle object together with the perception region can provide additional information such as the velocity of the object that is not provided in the perception region container part as shown in Table 6b in the Appendix:
Therefore, clause 6.1.2.3 may be changed to add some inclusion of the region created to report the occupancy of road region and when relevant deviation in the shape.

In the clause 6.1.2.4, it is proposed to consider the possible object inclusion if it is contained in the perception region selected for transmission (inclusion of the last vehicle). In Clause 6.1.2.4, the value of information (Vol) of an object can also be computed based on the Vol of perception regions when an object is located in a previously included perception region or in the perception region selected for transmission.

Last, in clause 7.1.7 describing the perception region container, it is proposed first to add the use of a perception region to report the region occupancy in the clause 7.1.7. Second, it is proposed for use case with many objects, that if the number of objects in perception regions is reported, it is not mandatory to have all object ids listed in the perceived object id list.

Accordingly, it is proposed that a CPM shall include a perception region container:
- whenever the CPS detects relevant deviations of the available dynamic perception capabilities (perceptionRegionShape, perceptionRegionConfidence, shadowingApplies) with respect to the static perception capabilities described in the Sensor Information Container or previously included Perception Regions.
- whenever the CPS creates a region to report the occupancy of a road region (numberOfPerceivedObjects, perceivedObjectlds).
- whenever the CPS detects relevant deviations in the perception region shape (perceptionRegionShape) of previously included Perception Regions (perceptionRegionShape).

An object whose object perception quality exceeds ObjectPerceptionQualityThreshold shall be selected for transmission from the object list as a result of the current CPM generation event if the object complies to any of the following conditions (all CPS configuration parameters and their recommended values can be found in Annex F):
- if the object is contained in a perception region selected for transmission and if the value of information of this object to characterize the region is high.

Additionally, a Perception Region can be used to divide the perception region of a sensor into smaller parts, e.g. in case more than one CPM needs to be assembled (clause 6.1.3.3) or to report the occupancy of a road region (using the component numberOfPerceivedObjects or perceivedObjectlds).

Perception Region may include the component numberOfPerceivedObjects. If present, numberOfPerceivedObjects shall contain the number of all currently perceived objects in the PerceptionRegion.

Perception Region may include the component perceivedObjectlds. If present, perceivedObjectlds shall list the values of the component objectld of all perceived objects that are contained in PerceptionRegionShape that are not dominated by any other Perception Region. Thus, each objectld is contained in at most one Perception Region, while the value of numberOfPerceivedObjects may be higher than the number of elements in perceivedObjectlds.

To reduce the load on the communication channel:
- if the component numberOfPerceivedObjects is present, the perceivedObjectlds may only list a subset of the perceived objects that are contained in PerceptionRegionShape based on the value of the information of the object contained in the Perception Region.

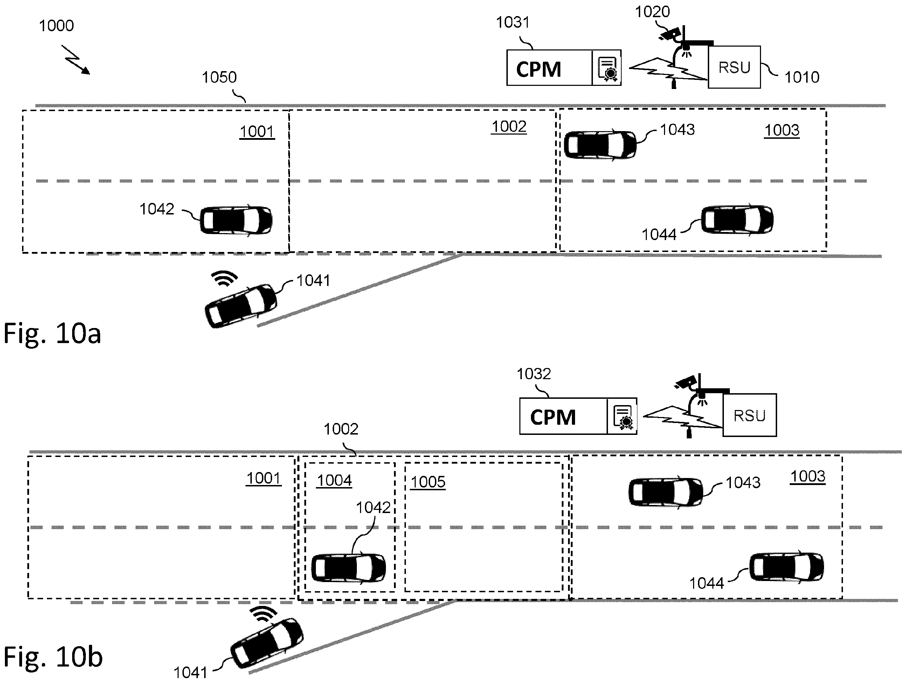

**Figure 10****,** comprising Figures 10a and 10b, illustrates another use case where this disclosure could be implemented, to improve access safety to an expressway. Figure 10a illustrates the situation at time t0 and Figure 10b illustrates the evolution of the situation at time t1.

The ITS system 1000 monitors a motorway 1050, using RSU 1010 and camera 1020. Three perception regions 1001, 1002, and 1003 are created to report the situation in CPM 1031 transmitted at time t0 and CPM 1032 transmitted at time t1.

As illustrated, at time t0, region 1001 contains vehicle 1042, region 1002 is empty (i.e., it does not comprise any object), region 1003 contains vehicles 1043 and 1044, and vehicle 1041 is entering the motorway.

At time t1, the region 1002 is no longer empty since vehicle 1042 has moved from region 1001 to region 1002.

It is assumed here that vehicle 1041 is equipped with an ITS-S able to receive CPMs, in particular CPMs 1031 and 1032. Based on CPM 1031, vehicle 1041 is able determining that region 1002 was reported as empty at time t0. According to the illustrated example, the region 1002 is reported again in the next CPM (e.g., CPM 1032), whatever its inclusion frequency, to warn vehicle 1041 (that is entering into the motorway) that this region is no longer empty.

For example, if the speed of vehicle 1042 is around 70 km/h, it sends a Cooperative Awareness Message with its updated position every 200 ms, based on TS 103 900 v2.1.1, and included it in a CPM every 200 ms (one of the inclusion rules being that the distance between the current position of the object and its last reported position exceeds 4 m), based on TS 103 324 v2.1.1.

According to some embodiments of the disclosure, the inclusion of the object is anticipated in the next CPM generation event because this object is entering in a region that was reported as empty in the previous CPM generation event. Table 7 in the Appendix illustrates the content of the generated CPM based on such an embodiment.

In this example, region 1002 is created by the road monitoring application in order to assist vehicles such as vehicle 1041 when entering in a highway ramp to easily analyse the content of the entry ramp.

As another embodiment, at time t1, instead of keeping the static road region split resulting in regions 1001, 1002, and 1003, another approach that may be implemented by the monitoring road application is to create other regions based on the occupancy. For example, region 1002 may be split into region 1004 containing vehicle 1042 and region 1005 indicating the remaining free space of the initial road region 1002. Table 8 in the Appendix illustrates the content of the generated CPM based on such an embodiment.

Collective Perception Service (TS 103 324, V2.1.1) specifies Perception Regions that can be reported in CPMs by an ITS-S to report about deviation of the available dynamic perception capabilities with respect to the static perception capabilities (reported in the Sensor Information Container). It enables an ITS-S to report about free space and shadow areas (see Figure 13 in TS 103 324, V2.1.1 as example) (was previously named Free Space Addendum in TR 103 562).

Figure 10a shows an example where a free space on a highway entry ramp is reported in a CPM using a Perception Region where the number of objects (component numberOfPerceivedObjects) is set to 0.

Therefore, according to TS 103 324, V2.1.1, the CPM, at time t0, contains:
PRC: Perception Region 1002 - Number of objects = 0
POC: include 1042, 1043, 1044
and the CPM, at time t1, contains:
PRC: Perception Region 1002 - Number of objects = 1
POC: include 1042, 1043, 1044

When the state of a perception region previously included in CPM changes from unoccupied to occupied (such as the perception region 1002 shown in Figure 10 reported as a free space at time t0 and that becomes occupied at time t1), this perception region should be selected for transmission at the next CPM generation event. Similarly, the newly contained object (vehicle 1042 located in Perception Region 1002 at time t1) should be selected for transmission with the Perception Region 1002.

Therefore, TS 103 324 V2.1.1 may be changed in the clause 6.1.2.3 for inclusion of perception region when there is a changed from unoccupied state to occupied state. It may also be changed in the clause 6.1.2.4 for inclusion of perceived objects when it is contained in a region with the state change from unoccupied to occupied.

Accordingly, a CPM shall include a perception region container:
- whenever the CPS detects relevant deviations of the available dynamic perception capabilities (perceptionRegionShape, perceptionRegionConfidence, shadowingApplies) with respect to the static perception capabilities described in the Sensor Information Container or previously included Perception Regions.
- whenever the CPS detects relevant deviations in the occupancy level information associated to previously included Perception Regions (numberOfPerceivedObjects, perceivedObjectlds). Example of a relevant deviation is when the numberOfPerceivedObjects was 0 at the last inclusion time and is now > 0 at the current CPM generation event.

An object whose object perception quality exceeds ObjectPerceptionQualityThreshold shall be selected for transmission from the object list as a result of the current CPM generation event if the object complies to any of the following conditions (all CPS configuration parameters and their recommended values can be found in Annex F):
- if the object is contained in a previously included perception region that is selected for transmission following a relevant deviation in the region occupancy level as defined in clause 6.1.2.3 (example of an object entering in a previously unoccupied region).

As described above, another use of Perception Regions is to split a sensor region in smaller regions for example when more than one CPM needs to be assembled (data size > MTU_CPM) as described in the clause 6.1.3.3 of TS 103 324 related to CPM assembly allows ITS-S to assemble CPM per perception regions. Perception regions and selected objects for transmission contained in the region are transmitted in the same CPM data segment (See Figure 10b). In case of loss of one CPM data segment, the other received segments may still be used by the receiving ITS-Ss.

Accordingly, the CPM Assembly, at time t0:
1001: 1 object, 1042
1002: 0 object
1003: 2 objects, 1043, 1044
and the CPM Assembly, at time t1:
1001: 0 object
1002: 1 object, 1042
1003: 2 objects, 1043, 1044

First point regarding the current clause 6.1.2.3 the use to split the perception region into smaller parts is not indicated. The second point is that the requirement to have the Sensor Information Container and Perception Region Container that may fit into one CPM will not be always fulfil, this requirement is applicable to the Object Utility Assembly mode.

Accordingly, a CPM shall include a perception region container:
- whenever the CPS detects relevant deviations of the available dynamic perception capabilities (perceptionRegionShape, perceptionRegionConfidence, shadowingApplies) with respect to the static perception capabilities described in the Sensor Information Container or previously included Perception Regions.
- whenever the CPS creates a region to divide the perception region of a sensor into smaller parts.

To reduce the load on the communication channel:
- the number of Perception Region instances in the Perception Region Container shall be limited to MaxPerceptionRegions;
- the amount of data contained in the Perception Region Container shall be limited, in order that the Sensor Information Container and the Perception Region Container may fit into one CPM if the configuration parameter MessageAssemblyConfig is set to "0" (object utility assembly) as defined in clause 6.1.3.

**Figure 11** illustrates another use case where this disclosure could be implemented, to improve safety in case of a traffic jam on a motorway.

The ITS system 1100 monitors a motorway 1160, using RSU 1110 and camera 1120. One perception region 1101 is created to report the situation in CPM 1130.

As illustrated, since region 1101 comprises many vehicles, reporting individually each object costs a lot in terms of data amount, without providing proportionally as much useful information for the receiving ITS-Ss.

According to this example, regions are created based on the occupancy of the monitored road (e.g., in step 410 in Figure 4). Moreover, based on the road application configuration (e.g., road application configuration 250 in Figure 2), the regions may be additionally split based on the road topology information. For the sake of illustration, only one region 1101 is created.

As illustrated, there are 27 vehicles plus one pedestrian in the area monitored by roadside unit 1110. In view of the vehicle slow speed in case of traffic jam, the frequency of reporting should be every second for vehicles and every 500 ms for the pedestrian.

If all the perceived objects are reported in the CPMs, 700 bytes are needed to report the objects in the Perceived Object Container and 77 bytes are needed to report the region in the Perception Region, as illustrated in Table 9 in the Appendix.

Since reporting all the perceived objects is not useful in terms of safety, the reporting may be optimized by transmitting only relevant objects of a region comprising many objects. Therefore, according to some embodiments of the disclosure, a sub-set of the perceived objects, that is representative of the global situation, is selected to be reported.

For example, the objects located at the limits of region 1101, such as vehicles 1142, 1143, 1144, 1145, 1146, 1147, 1148, and 1149 may be included to represent the global situation associated with this region. Due to the road topology described in the road application configuration (e.g., road application configuration 250 in Figure 2), the vehicles near the entry ramp such as vehicle 1150 are also selected for inclusion. In addition, objects having a different type than the other object types present in the region may also be selected for inclusion, such as pedestrian 1170.

As a result, if only these perceived objects are reported in the CPMs, 250 bytes are needed to report the objects in the Perceived Object Container and 77 bytes are needed to report the region in the Perception Region, as illustrated in Table 10 in the Appendix.

Approaching vehicles 1140 and 1141, each equipped with an ITS-S receiving CPM 1130, receive the necessary information to adapt their speed when approaching to region 1101 comprising many vehicles.

**Figure 12** illustrates another use case where this disclosure could be implemented, to improve safety in case of a traffic jam on a road intersection controlled by a traffic light phase.

As illustrated, the area represented in Figure 12, that is similar to the one illustrated in Figure 1, is monitored by a roadside unit (RSU) 1210 that comprises an ITS station (ITS-S) 1212 and which is associated with a set of sensors, for instance one or more cameras such as cameras 1220 and 1221, lidars and/or radars. These sensors are used to monitor the traffic, in particular to identify vehicles, pedestrians, and possibly other kinds of objects, thanks to an analytic module 1211. This analytic module is used to determine a list of objects that may be described in CPMs, for example in CPM 1290 emitted by ITS station 1212.

For the sake of illustration and regarding the example illustrated in Figure 12, regions could be determined based on the road lane topology, enabling organizing the items of information so as to help a receiving ITS-S to analyse the scene. According to the illustrated example, regions are defined as follows:
- regions 1230, 1231, 1232, and 1233 are zones reserved for bicyclists,
- regions 1240, 1241, 1242, 1243, 1245, 1250, 1251, 1252, and 1253 are drivable regions for vehicles, and
- regions 1260, 1261, 1262, and 1263 are crosswalk zones used by pedestrians.

In this situation, in view of the traffic jam, a situation analysis module adds region 1240 as high priority to be reported in future CPMs. Therefore, vehicles receiving CPM 1290 are warned that they should avoid crossing the intersection if their destination is the outgoing lane corresponding to 1240, to avoid being blocked in region 1245.

In the situation where one of the outgoing lanes is crowded of vehicles such as the region 1240, the selection of the regions to include in CPMs (e.g., step 420 in Figure 4) selects region 1240 as having high priority so that vehicles should avoid crossing the intersection since the outgoing lane is too crowded.

**Figure 13** illustrates another use case where this disclosure could be implemented, to improve safety if an emergency vehicle or a dangerous vehicle is present.

As illustrated, the area represented in Figure 13, that is similar to the one illustrated in Figures 1 and 12, is monitored by a roadside unit (RSU) 1310 that comprises an ITS station (ITS-S) 1312 and which is associated with a set of sensors, for instance one or more cameras such as cameras 1320 and 1321, lidars and/or radars. These sensors are used to monitor the traffic, in particular to identify vehicles, pedestrians, and possibly other kinds of objects, thanks to an analytic module 1311. This analytic module is used to determine a list of objects that may be described in CPMs.

In addition, according to this example, vehicle 1301 is an ITS-S that may transmit CPMs, for example CPM 1330.

For the sake of illustration, it is assumed that a situation analysis module of the ITS-S of vehicle 1301 is detecting the presence of emergency vehicle 1302 in front of it or of a vehicle violating the red traffic light. To highlight the presence of this object, region 1303 is created and considered as high priority so as to be reported with object 1302 in CPMs. Likewise, other objects perceived by vehicle 1301 may be reported in CPMs, in relation to other regions, for example in relation to regions 1304, 1305, and/or 1306, with medium or low priority.

### Splitting a perceived area into a plurality of regions

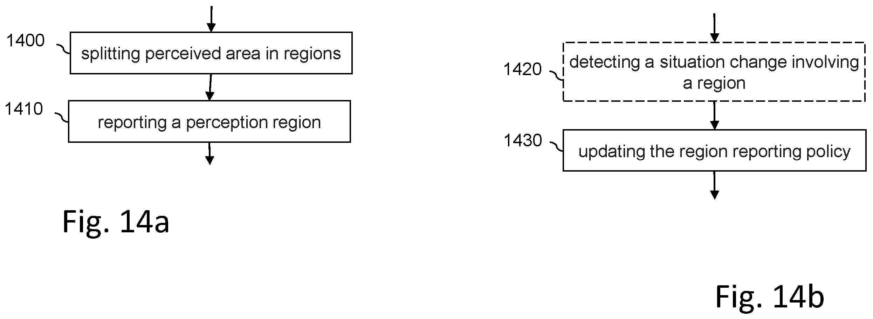

**Figure 14****,** comprising Figures 14a and 14b, illustrates an example of steps for splitting a perceived area into regions and for updating a region reporting policy.

Figure 14a illustrates a step to be carried out in an ITS-S for splitting a perceived area monitored by the ITS-S into regions.

Splitting a perceived area into regions (step 1400) may be done using a static description of the road. For the sake of illustration, regions may be created based on the geometry of crosswalks, bicyclist lanes, etc., for example as described in reference to the example illustrated in Figure 1.

Splitting a perceived area into regions may also be done as a function of the result of an analysis of a traffic situation. For example, regions may be created based on an object behaviour, for example as illustrated in the example of Figure 13.

Splitting a perceived area into regions may also combine both the static description of the road topology and the dynamic analysis of a traffic situation. As illustrated in the example of Figure 9, the regions are created based on the incoming lanes in front of a toll barrier for their width, and the length is dynamically adjusted based on the length of the vehicle queues. Similarly, regions can be created to indicate the absence of objects in a given area.

These mechanisms of splitting a perception area into regions, for example in situations where there are many objects to report, make it possible to organize in regions the items of information that are transmitted in CPMs (step 1410), which helps receiving ITS-Ss to analyse the situation and to focus to their area of interests. According to some embodiments, each reported region is transmitted in the same CPM as the reported objects contained in this reported region.

Figure 14b illustrates steps to be carried out in an ITS-S for updating a region reporting policy.

As illustrated, a first step (step 1420) is directed to detecting a change in a situation involving a region or to obtaining an item of information representative of such a change. A change of situation may be the results of a traffic light phase change. For the sake of illustration, the change of a traffic light phase may be detected by analysis SPATEM messages. A change of situation may also be the results of changes of object positions in the monitored area. Still for the sake of illustration, an object may move from one region to another region, as illustrated in the example of Figures 10a and 10b.

Next, depending on the situation change, the reporting policy associated with the region is updated (step 1430). For the sake of illustration, the reporting policy may comprise one or more of the following reporting parameters:
- the frequency of reporting the region in next CPMs and/or the next time inclusion in a CPM,
- the type of data to report for the region in next CPMs, and
- the objects to be included with the region in next CPMs.

Here are some examples of updating the reporting policy:
- immediate inclusion of the considered region in the next CPM if the region state changes from unoccupied to occupied and immediate inclusion in the next CPM of objects present in the region,
- including only the number of objects located in the considered region, without including the list of perceived object identifier if the number of objects reaches a given threshold (i.e., if the number of objects becomes too high)
- including only or mainly the representative objects that are located in the region (such as objects located at the limits of the region), and
- alternating regions over multiple CPMs to avoid reaching the maximum data size allowed per CPM.

Thanks to this dynamic reporting policy update, the Collective Perception Service (CPS) selects useful information for transmission, that is to say transmits items of information that are useful for the receiving ITS-Ss, while keeping the CPMs compact and not overload the communication network.

### Example of a hardware to carry out steps of the method of embodiments of the present disclosure

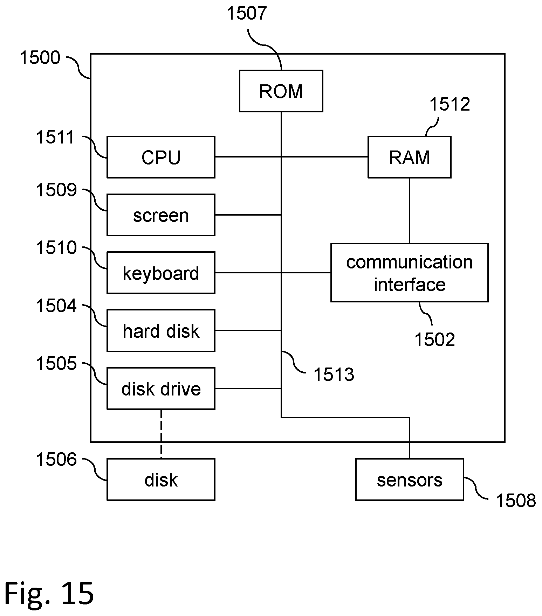

**Figure 15** is a schematic representation of an example of a communication ITS-S device configured to implement some embodiments of the present disclosure. It may be either an ITS-S embedded in a vehicle or in a road side entity.

The communication device 1500 may preferably be a device such as a microcomputer, a workstation or a light portable device. The communication device 1500 comprises a communication bus 1513 to which there are preferably connected:
- a central processing unit 1511, such as a microprocessor, denoted CPU or a GPU (for graphical processing unit);
- a read-only memory 1507, denoted ROM, for storing computer programs for implementing some embodiments of the disclosure;
- a random access memory 1512, denoted RAM, for storing the executable code of methods according to embodiments of the disclosure as well as the registers adapted to record variables and parameters necessary for implementing methods according to embodiments of the disclosure; and
- at least one communication interface 1502 connected to the radio communication network over which ITS messages are transmitted. The ITS messages are written from a FIFO sending memory in RAM 1512 to the network interface for transmission or are read from the network interface for reception and writing into a FIFO receiving memory in RAM 1512 under the control of a software application running in the CPU 1511.

Optionally, the communication device 1500 may also include the following components:
- a data storage means 1504 such as a hard disk, for storing computer programs for implementing methods according to one or more embodiments of the disclosure;
- a disk drive 1505 for a disk 1506, the disk drive being adapted to read data from the disk 1506 or to write data onto said disk;
- a screen 1509 for serving as a graphical interface with the user, by means of a keyboard 1510 or any other pointing means.

The communication device 1500 may be optionally connected to various peripherals including perception sensors 1508, such as for example a digital camera, each being connected to an input/output card (not shown) so as to supply data to the communication device 1500.

Preferably the communication bus provides communication and interoperability between the various elements included in the communication device 1500 or connected to it. The representation of the bus is not limiting and in particular the central processing unit is operable to communicate instructions to any element of the communication device 1500 directly or by means of another element of the communication device 1500.

The disk 1506 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the disclosure to be implemented.

The executable code may optionally be stored either in read-only memory 1507, on the hard disk 1504 or on a removable digital medium such as for example a disk 1506 as described previously. According to an optional variant, the executable code of the programs can be received by means of the communication network, via the interface 1502, in order to be stored in one of the storage means of the communication device 1500, such as the hard disk 1504, before being executed.

The central processing unit 1511 is preferably adapted to control and direct the execution of the instructions or portions of software code of the program or programs according to the disclosure, which instructions are stored in one of the aforementioned storage means. On powering up, the program or programs that are stored in a nonvolatile memory, for example on the hard disk 1504 or in the read-only memory 1507, are transferred into the random access memory 1512, which then contains the executable code of the program or programs, as well as registers for storing the variables and parameters necessary for implementing the disclosure.

In a preferred embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a skilled person in the art which lie within the scope of the present disclosure.

Many further modifications and variations will suggest themselves to those versed in the art upon referring to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

### APPENDIX

**Table 1: Example of perception regions and associated object features**

| **CPM perceptionRegion** | **ObjectIDs listed in the region** | **Number of objects in the region** |
|---|---|---|
| ... | ... | ... |
| 150 | 170 | - |
| 151 | none | 0 |
| 152 | 171 | 1 |
| 153 | 172 | 1 |
| ... | ... | ... |
| 160 | 180 | 1 |
| ... | ... | ... |

**Table 2: Example of perception regions and associated objects, corresponding to Figure 6a**

| **region** | **priority level** | **objects in the region** |
|---|---|---|
| 600 | 3 | 630, 635 |
| 610 | 3 | 615, 620, 625 |
| 605 | 1 | 620, 640 |

**Table 3: High-level description of the content of generated CPMs, corresponding to Figure 6b**

| **time** | **Perception Region Container** | | | **Perceived Object Containers** |
|---|---|---|---|---|
| | Perception Region | Number of Objects | Object ID List | Perceived Objects |
| t0 | 600 | 2 | 630, 635 | 615, 620, 625, 630, 635 |
| | 610 | 3 | 615, 620, 625 | |
| t1 | 605 | 2 | 620, 640 | 640 |
| t2 | 600 | 2 | 630,635 | |
| | 610 | 3 | 615, 620, 635 | |
| t3 | - | | | |
| t4 | 600 | 2 | 630, 635 | |
| | 610 | 3 | 615, 620, 635 | |
| t5 | - | | | |
| t6 | 600 | 2 | 630, 635 | |
| | 610 | 3 | 615, 620, 635 | |
| t7 | - | | | |
| t8 | 600 | 2 | 630, 635 | |
| | 610 | 3 | 615, 620, 635 | |
| t9 | - | | | |
| t10 | 600 | 2 | 630, 635 | 615, 620, 625, 630, 635 |
| | 610 | 3 | 615, 620, 635 | |
| t11 | 605 | 2 | | 640 |

**Table 4: High-level description of the content of generated CPMs, corresponding to Figure 8b**

| **time** | **Perception Region Container** | | | **Perceived Object Containers** |
|---|---|---|---|---|
| | Perception Region | Number of Objects | Object ID List | Perceived Objects |
| t0 | 800 | 1 | | 810 |
| | 805 | 1 | 810 | |
| t1 | - | | | |
| t2 | 805 | 1 | 810 | |
| t3 | - | | | |
| t4 | 800 | 1 | | |
| | 805 | 1 | 810 | |
| t5 | 800 | 0 | | |
| | 805 | 1 | 810 | 810 |

**Table 5: Example of perception regions and associated objects, corresponding to Figure 9**

| **region** | **object identifier** | **number of objects** | **priority level** |
|---|---|---|---|
| 901 | 910 | 1 | low |
| 902 | 911, 912 | 2 | medium |
| 903 | 914, 914, 915, 916, 917 | 5 | high |
| 904 | 918 | 1 | low |
| 905 | empty | 0 | medium |

**Table 6a: High-level description of the content of generated CPMs, corresponding to Figure 9**

| **time** | **Perception Region Container** | | | **Perceived Object Containers** |
|---|---|---|---|---|
| | Perception Region | Number of Objects | Object ID List | Perceived Objects |
| t0 | 903 | 5 | 913, 914, 915, 916, 917 | 910, 911, 912, 913, 914, 915, 916, 917, 918 |
| | 905 | 0 | - | |
| | 902 | 2 | 911, 912 | |
| | 901 | 1 | 910 | |
| | 904 | 1 | 918 | |
| t1 | 903 | 5 | 913, 914, 915, 916, 917 | 917 |
| t2 | 903 | 5 | 913, 914, 915, 916, 917 | 917,912 |
| | 905 | 0 | - | |
| | 902 | 2 | 911, 912 | |
| t3 | 903 | 5 | 913, 914, 915, 916, 917 | 917 |
| t4 | 903 | 5 | 913, 914, 915, 916, 917 | |
| | 905 | 0 | - | |
| | 902 | 2 | 911, 912 | |
| ... | ... | ... | ... | ... |
| t10 | 903 | 5 | 913, 914, 915, 916, 917 | 910, 911, 912, 913, 914, 915, 916, 917, 918 |
| | 905 | 0 | - | |
| | 902 | 2 | 911, 912 | |
| | 901 | 1 | 910 | |
| | 904 | 1 | 918 | |
| ... | ... | ... | ... | ... |

**Table 6b: Example of CPM reporting based on the value of information of the regions and objects in the regions, corresponding to Figure 9**

| | | **number of objects** | **Objects Ids** |
|---|---|---|---|
| Perception Region Container | Region 901 | 1 | 910 |
| | Region 902 | 2 | 912 |
| | Region 903 | 5 | 917 |
| | Region 904 | 1 | 918 |
| | Region 905 | 0 | - |
| Perceived Object Container | 910 | | |
| | 912 | | |
| | 917 | | |
| | 918 | | |

**Table 7: High-level description of the content of generated CPMs, corresponding to Figure 10, according to a first embodiment**

| **time** | **Perception Region Container** | | | **Perceived Object Containers** |
|---|---|---|---|---|
| | Perception Region | Number of Objects | Object ID List | Perceived Objects |
| t0 (CPM 1031) | 1001 | 1 | 1042 | 1042, 1043, 1044 |
| | 1002 | 0 | - | |
| | 1003 | 2 | | |
| t1 (CPM 1032) | 1002 | 1 | 1042 | 1042 |

**Table 8: High-level description of the content of generated CPMs, corresponding to Figure 10, according to a second embodiment**

| **time** | **Perception Region Container** | | | **Perceived Object Containers** |
|---|---|---|---|---|
| | Perception Region | Number of Objects | Object ID List | Perceived Objects |
| t0 (CPM 1031) | 1001 | 1 | 1042 | 1042, 1043, 1044 |
| | 1002 | 0 | - | |
| | 1003 | 2 | | |
| t1 (CPM 1032) | 1004 | 1 | 1042 | 1042 |
| | 1005 | 0 | - | |

**Table 9: Size of the Perceived Object Container and Perception Region, according to standard reporting rules, corresponding to Figure 11**

| | **number of objects** | **estimated data size** |
|---|---|---|
| Perceived Object Container | 28 | 700 bytes |
| Perception Region | 28 | 77 bytes |

**Table 10: Size of the Perceived Object Container and Perception Region, according to some embodiments of the disclosure, corresponding to Figure 11**

| | **number of objects** | **estimated data size** |
|---|---|---|
| Perceived Object Container | 10 | 250 bytes |
| Perception Region | 28 | 77 bytes |

## Claims

1. A method of communication, in an Intelligent Transport System, ITS, comprising an ITS station, ITS-S, the method comprising, at the ITS-S:
updating a reporting policy of at least one perception region of a plurality of perception regions for reporting, in successive Collective Perception Messages, CPMs, characteristics of the at least one perception region,
the updating being based on a situation change involving at least one perception region of the plurality of perception regions.

2. The method of claim 1, wherein the reporting policy comprises parameters, the parameters comprising at least one of an indication of when the at least one perception region associated with the reporting policy is to be reported, a frequency of reporting the at least one perception region associated with the reporting policy, a priority level of the at least one perception region associated with the reporting policy, a selection indication for selecting objects located within the at least one perception region associated with the reporting policy, that are to be reported, a mode of reporting objects located within the at least one perception region associated with the reporting policy, and a type of data associated with the at least one perception region associated with the reporting policy, that are to be reported, wherein updating the reporting policy comprises updating one or more of the parameters of the reporting policy.

3. The method of claim 2, wherein modes of reporting objects located within the at least one perception region associated with the reporting policy comprise a mode of reporting a number of objects perceived in the at least one perception region associated with the reporting policy, a mode of reporting the number of objects and identifiers of all the objects perceived in the at least one perception region associated with the reporting policy, and/or a mode of reporting the number of objects and identifiers of some of the objects perceived in the at least one perception region associated with the reporting policy, further comprising selecting a mode of reporting objects located within the at least one perception region associated with the reporting policy as a function of the number of objects and of a threshold.

4. The method of claim 2 or claim 3, wherein an indication of when the at least one perception region associated with the reporting policy is to be reported is a next CPM to be generated.

5. The method of any one of claims 2 to 4, wherein a selection indication for selecting objects located within the at least one perception region associated with the reporting policy indicates selection of objects representative of the at least one perception region associated with the reporting policy.

6. The method of any one of claims 2 to 5, wherein a frequency of reporting the at least one perception region associated with the reporting policy is determined as a function of the priority level of the at least one perception region associated with the reporting policy.

7. The method of any one of claims 1 to 6, wherein reporting the at least one perception region associated with the reporting policy comprises reporting, in relation to the at least one perception region associated with the reporting policy, at least one object perceived within the at least one perception region associated with the reporting policy.

8. The method of any one of claims 1 to 7, wherein at least two perception regions of the plurality are overlapping and wherein at least one object is perceived within all of the at least two perception regions, the at least one object perceived within all of the at least two perception regions being reported only in the one of at least two of the perception regions having the higher reporting priority among reporting priorities associated with the at least two perception regions.

9. The method of any one of claims 1 to 8, wherein the reporting policy is updated as a function of a behaviour of at least one object perceived in the at least one perception region associated with the reporting policy, with regard to the same and/or at least one different perception regions.

10. The method of any one of claims 1 to 9, wherein the reporting policy is updated as a function of a change of state of the at least one perception region associated with the reporting policy with regards to an occupancy of the at least one perception region associated with the reporting policy.

11. The method of any one of claims 1 to 10, wherein reporting objects perceived in the at least one perception region associated with the reporting policy, in a CPM, comprises signalling an object identifier of each of a part of the objects perceived in the at least one perception region associated with the reporting policy.

12. The method of any one of claims 1 to 11, wherein the reporting policy is updated as a function of a change of shape of at least one perception region of the plurality.

13. The method of any one of claims 1 to 12, further comprising splitting at least a portion of a perceived area into the plurality of perception regions as a function of perceived objects and/or as a function of a static description of the portion of the perceived area.

14. The method of any one of claims 1 to 13, further comprising splitting the at least one perception region associated with the reporting policy as a function of a behaviour of at least one object perceived in the at least one perception region associated with the reporting policy.

15. The method of any one of claims 1 to 14, further comprising selecting some objects perceived in the at least one perception region associated with the reporting policy, that are to be reported in CPMs, wherein the selection is carried out as a function of the reporting policy.

16. The method of any one of claims 1 to 15, wherein the at least one perception region involved in the situation change is the at least one perception region associated with the reporting policy or at least one perception region different from the at least one perception region associated with the reporting policy.

17. A computer program product for a programmable apparatus, the computer program product comprising a sequence of instructions for implementing each of the steps of the method according to any one of claims 1 to 16 when loaded into and executed by the programmable apparatus.

18. A device for an Intelligent Transport System, ITS, station, the device comprising a processing unit configured for carrying out each of the steps of the method according to any one of claims 1 to 16.
